(19) Europäisches Patentamt
European Patent Office
Office européen des brevets

(11) **EP 4 478 287 A1**

(12) **EUROPEAN PATENT APPLICATION**
published in accordance with Art. 153(4) EPC

(43) Date of publication:
**18.12.2024 Bulletin 2024/51**

(21) Application number: **23753107.4**

(22) Date of filing: **07.02.2023**

(51) International Patent Classification (IPC):
*G06T 7/70* ^(2017.01)    *G06T 9/00* ^(2006.01)
*H04N 19/597* ^(2014.01)

(52) Cooperative Patent Classification (CPC):
**G06T 7/70; G06T 9/00; H04N 19/597**

(86) International application number:
**PCT/KR2023/001705**

(87) International publication number:
**WO 2023/153758 (17.08.2023 Gazette 2023/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.02.2022 KR 20220016109**

(71) Applicant: **LG Electronics Inc.**
**Yeongdeungpo-gu**
**Seoul 07336 (KR)**

(72) Inventors:
• **LEE, Sooyeon**
  **Seoul 06772 (KR)**
• **HUR, Hyejung**
  **Seoul 06772 (KR)**

(74) Representative: **Maikowski & Ninnemann**
**Patentanwälte Partnerschaft mbB**
**Postfach 15 09 20**
**10671 Berlin (DE)**

(54) **POINT CLOUD DATA TRANSMISSION METHOD, POINT CLOUD DATA TRANSMISSION DEVICE, POINT CLOUD DATA RECEPTION METHOD, AND POINT CLOUD DATA RECEPTION DEVICE**

(57)    A point cloud data transmission method according to embodiments may comprise the steps of: encoding point cloud data; and transmitting a bitstream including the point cloud data. In addition, a point cloud data transmission device according to embodiments may comprise: an encoder which encodes point cloud data; and a transmitter which transmits a bitstream including the point cloud data.

FIG. 1

EP 4 478 287 A1

**Description**

[Technical Field]

Embodiments relate to a method and device for processing point cloud content.

[Background Art]

Point cloud content is content represented by a point cloud, which is a set of points belonging to a coordinate system representing a three-dimensional space. The point cloud content may express media configured in three dimensions, and is used to provide various services such as virtual reality (VR), augmented reality (AR), mixed reality (MR), and self-driving services. However, tens of thousands to hundreds of thousands of point data are required to represent point cloud content. Therefore, there is a need for a method for efficiently processing a large amount of point data.

[Disclosure]

[Technical Problem]

Embodiments provide a device and method for efficiently processing point cloud data. Embodiments provide a point cloud data processing method and device for addressing latency and encoding/decoding complexity.
The technical scope of the embodiments is not limited to the aforementioned technical objects, and may be extended to other technical objects that may be inferred by those skilled in the art based on the entire contents disclosed herein.

[Technical Solution]

To achieve these objects and other advantages and in accordance with the purpose of the disclosure, as embodied and broadly described herein, a method of transmitting point cloud data may include encoding point cloud data, and transmitting a bitstream containing the point cloud data. In another aspect of the present disclosure, a method of receiving point cloud data may include receiving a bitstream containing point cloud data, and decoding the point cloud data.

[Advantageous Effects]

Devices and methods according to embodiments may process point cloud data with high efficiency.
The devices and methods according to the embodiments may provide a high-quality point cloud service.
The devices and methods according to the embodiments may provide point cloud content for providing general-purpose services such as a VR service and a self-driving service.

[Description of Drawings]

The accompanying drawings, which are included to provide a further understanding of the disclosure and are incorporated in and constitute a part of this application, illustrate embodiment(s) of the disclosure and together with the description serve to explain the principle of the disclosure. For a better understanding of various embodiments described below, reference should be made to the description of the following embodiments in connection with the accompanying drawings. The same reference numbers will be used throughout the drawings to refer to the same or like parts.
The accompanying drawings, which are included to provide a further understanding of the disclosure and are incorporated in and constitute a part of this application, illustrate embodiment(s) of the disclosure and together with the description serve to explain the principle of the disclosure. For a better understanding of various embodiments described below, reference should be made to the description of the following embodiments in connection with the accompanying drawings. The same reference numbers will be used throughout the drawings to refer to the same or like parts. In the drawings:

FIG. 1 shows an exemplary point cloud content providing system according to embodiments;
FIG. 2 is a block diagram illustrating a point cloud content providing operation according to embodiments;
FIG. 3 illustrates an exemplary process of capturing a point cloud video according to embodiments;
FIG. 4 illustrates an exemplary point cloud encoder according to embodiments;

# EP 4 478 287 A1

FIG. 5 shows an example of voxels according to embodiments;

FIG. 6 shows an example of an octree and occupancy code according to embodiments;

FIG. 7 shows an example of a neighbor node pattern according to embodiments;

FIG. 8 illustrates an example of point configuration in each LOD according to embodiments;

FIG. 9 illustrates an example of point configuration in each LOD according to embodiments;

FIG. 10 illustrates a point cloud decoder according to embodiments;

FIG. 11 illustrates a point cloud decoder according to embodiments;

FIG. 12 illustrates a transmission device according to embodiments;

FIG. 13 illustrates a reception device according to embodiments;

FIG. 14 illustrates an exemplary structure operable in connection with point cloud data transmission/reception methods/devices according to embodiments;

FIG. 15 illustrates inter-prediction according to embodiments;

FIG. 16 illustrates an example of a method of transmitting and receiving point cloud data according to embodiments;

FIG. 17 illustrates clustering of point cloud data according to embodiments;

FIG. 18 illustrates an example of an encoded bitstream according to embodiments;

FIG. 19 shows an example syntax of a sequence parameter set (seq_parameter_set) according to embodiments;

FIG. 20 shows an example syntax of a geometry parameter set (geometry_parameter_set) according to embodiments;

FIG. 21 shows an example syntax of a geometry slice header (geometry_slice_header) according to embodiments;

FIG. 22 shows an example syntax of an attribute parameter set (attribute_parameter_set) according to embodiments;

FIG. 23 illustrates an example of a transmission method/device according to embodiments;

FIG. 24 illustrates an example of a reception method/device according to embodiments;

FIG. 25 illustrates an example of a transmission method according to embodiments; and

FIG. 26 illustrates an example of a reception method according to embodiments.

[Best Mode]

Reference will now be made in detail to the preferred embodiments of the present disclosure, examples of which are illustrated in the accompanying drawings. The detailed description, which will be given below with reference to the accompanying drawings, is intended to explain exemplary embodiments of the present disclosure, rather than to show the only embodiments that may be implemented according to the present disclosure. The following detailed description includes specific details in order to provide a thorough understanding of the present disclosure. However, it will be apparent to those skilled in the art that the present disclosure may be practiced without such specific details.

Although most terms used in the present disclosure have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings.

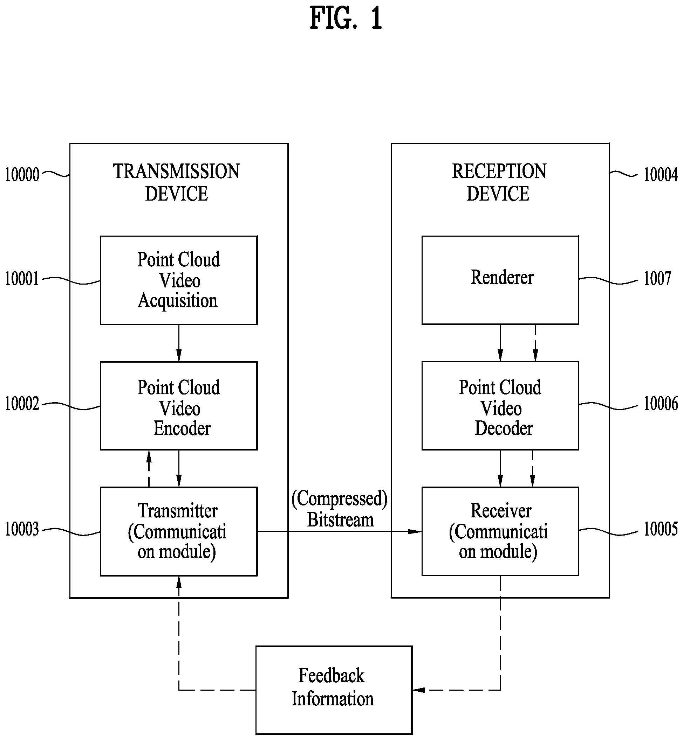

FIG. 1 shows an exemplary point cloud content providing system according to embodiments.

The point cloud content providing system illustrated in FIG. 1 may include a transmission device 10000 and a reception device 10004. The transmission device 10000 and the reception device 10004 are capable of wired or wireless communication to transmit and receive point cloud data.

The point cloud data transmission device 10000 according to the embodiments may secure and process point cloud video (or point cloud content) and transmit the same. According to embodiments, the transmission device 10000 may include a fixed station, a base transceiver system (BTS), a network, an artificial intelligence (AI) device and/or system, a robot, an AR/VR/XR device and/or server. According to embodiments, the transmission device 10000 may include a device, a robot, a vehicle, an AR/VR/XR device, a portable device, a home appliance, an Internet of Thing (IoT) device, and an AI device/server which are configured to perform communication with a base station and/or other wireless devices using a radio access technology (e.g., 5G New RAT (NR), Long Term Evolution (LTE)).

The transmission device 10000 according to the embodiments includes a point cloud video acquirer 10001, a point cloud video encoder 10002, and/or a transmitter (or communication module) 10003.

The point cloud video acquirer 10001 according to the embodiments acquires a point cloud video through a processing process such as capture, synthesis, or generation. The point cloud video is point cloud content represented by a point cloud, which is a set of points positioned in a 3D space, and may be referred to as point cloud video data, point cloud data, or the like. The point cloud video according to the embodiments may include one or more frames. One frame represents a still image/picture. Therefore, the point cloud video may include a point cloud image/frame/picture, and may be referred to as a point cloud image, frame, or picture.

The point cloud video encoder 10002 according to the embodiments encodes the acquired point cloud video data. The point cloud video encoder 10002 may encode the point cloud video data based on point cloud compression coding. The point cloud compression coding according to the embodiments may include geometry-based point cloud compression (G-PCC) coding and/or video-based point cloud compression (V-PCC) coding or next-generation coding. The point cloud compression coding according to the embodiments is not limited to the above-described embodiment. The point cloud video encoder 10002 may output a bitstream containing the encoded point cloud video data. The bitstream may contain not only the encoded point cloud video data, but also signaling information related to encoding of the point cloud video data.

The transmitter 10003 according to the embodiments transmits the bitstream containing the encoded point cloud video data. The bitstream according to the embodiments is encapsulated in a file or segment (e.g., a streaming segment), and is transmitted over various networks such as a broadcasting network and/or a broadband network. Although not shown in the figure, the transmission device 10000 may include an encapsulator (or an encapsulation module) configured to perform an encapsulation operation. According to embodiments, the encapsulator may be included in the transmitter 10003. According to embodiments, the file or segment may be transmitted to the reception device 10004 over a network, or stored in a digital storage medium (e.g., USB, SD, CD, DVD, Blu-ray, HDD, SSD, etc.). The transmitter 10003 according to the embodiments is capable of wired/wireless communication with the reception device 10004 (or the receiver 10005) over a network of 4G, 5G, 6G, etc. In addition, the transmitter may perform a necessary data processing operation according to the network system (e.g., a 4G, 5G or 6G communication network system). The transmission device 10000 may transmit the encapsulated data in an on-demand manner.

The reception device 10004 according to the embodiments includes a receiver 10005, a point cloud video decoder 10006, and/or a renderer 10007. According to embodiments, the reception device 10004 may include a device, a robot, a vehicle, an AR/VR/XR device, a portable device, a home appliance, an Internet of Things (IoT) device, and an AI device/server which are configured to perform communication with a base station and/or other wireless devices using a radio access technology (e.g., 5G New RAT (NR), Long Term Evolution (LTE)).

The receiver 10005 according to the embodiments receives the bitstream containing the point cloud video data or the file/segment in which the bitstream is encapsulated from the network or storage medium. The receiver 10005 may perform necessary data processing according to the network system (e.g., a communication network system of 4G, 5G, 6G, etc.). The receiver 10005 according to the embodiments may decapsulate the received file/segment and output a bitstream. According to embodiments, the receiver 10005 may include a decapsulator (or a decapsulation module) configured to perform a decapsulation operation. The decapsulator may be implemented as an element (or component) separate from the receiver 10005.

The point cloud video decoder 10006 decodes the bitstream containing the point cloud video data. The point cloud video decoder 10006 may decode the point cloud video data according to the method by which the point cloud video data is encoded (e.g., in a reverse process of the operation of the point cloud video encoder 10002). Accordingly, the point cloud video decoder 10006 may decode the point cloud video data by performing point cloud decompression coding, which is the reverse process to the point cloud compression. The point cloud decompression coding includes G-PCC coding.

The renderer 10007 renders the decoded point cloud video data. The renderer 10007 may output point cloud content by rendering not only the point cloud video data but also audio data. According to embodiments, the renderer 10007 may include a display configured to display the point cloud content. According to embodiments, the display may be implemented as a separate device or component rather than being included in the renderer 10007.

The arrows indicated by dotted lines in the drawing represent a transmission path of feedback information acquired by the reception device 10004. The feedback information is information for reflecting interactivity with a user who consumes the point cloud content, and includes information about the user (e.g., head orientation information, viewport information, and the like). In particular, when the point cloud content is content for a service (e.g., self-driving service, etc.) that requires interaction with the user, the feedback information may be provided to the content transmitting side (e.g., the transmission device 10000) and/or the service provider. According to embodiments, the feedback information may be used in the reception device 10004 as well as the transmission device 10000, or may not be provided.

The head orientation information according to embodiments is information about the user's head position, orientation, angle, motion, and the like. The reception device 10004 according to the embodiments may calculate the viewport information based on the head orientation information. The viewport information may be information about a region of a point cloud video that the user is viewing. A viewpoint is a point through which the user is viewing the point cloud video, and may refer to a center point of the viewport region. That is, the viewport is a region centered on the viewpoint, and the size and shape of the region may be determined by a field of view (FOV). Accordingly, the reception device 10004 may extract the viewport information based on a vertical or horizontal FOV supported by the device in addition to the head orientation information. Also, the reception device 10004 performs gaze analysis or the like to check the way the user consumes a point cloud, a region that the user gazes at in the point cloud video, a gaze time, and the like. According to embodiments, the reception device 10004 may transmit feedback information including the result of the gaze analysis to the transmission device 10000. The feedback information according to the embodiments may be acquired in the rendering and/or display process. The feedback information according to the embodiments may be secured by one or more sensors included in the reception device 10004. According to embodiments, the feedback information may be secured by the renderer 10007 or a separate external element (or device, component, or the like). The dotted lines in FIG. 1 represent a process of transmitting the feedback information secured by the renderer 10007. The point cloud content providing system may process (encode/decode) point cloud data based on the feedback information. Accordingly, the point cloud video data decoder 10006 may perform a decoding operation based on the feedback information. The reception device 10004 may transmit the feedback information to the transmission device 10000. The transmission device 10000 (or the point cloud video data encoder 10002) may perform an encoding operation based on the feedback information. Accordingly, the point cloud content providing system may efficiently process necessary data (e.g., point cloud data corresponding to the user's head position) based on the feedback information rather than processing (encoding/decoding) the entire point cloud data, and provide point cloud content to the user.

According to embodiments, the transmission device 10000 may be called an encoder, a transmission device, a transmitter, or the like, and the reception device 10004 may be called a decoder, a receiving device, a receiver, or the like.

The point cloud data processed in the point cloud content providing system of FIG. 1 according to embodiments (through a series of processes of acquisition/encoding/transmission/decoding/rendering) may be referred to as point cloud content data or point cloud video data. According to embodiments, the point cloud content data may be used as a concept covering metadata or signaling information related to the point cloud data.

The elements of the point cloud content providing system illustrated in FIG. 1 may be implemented by hardware, software, a processor, and/or a combination thereof.

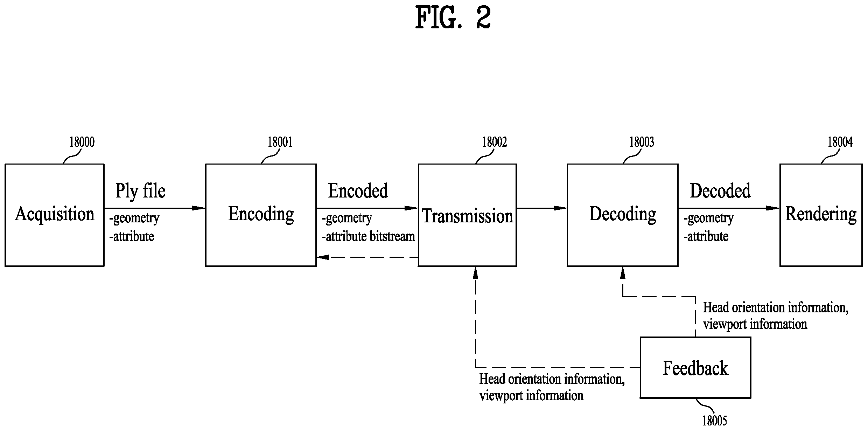

FIG. 2 is a block diagram illustrating a point cloud content providing operation according to embodiments.

The block diagram of FIG. 2 shows the operation of the point cloud content providing system described in FIG. 1. As described above, the point cloud content providing system may process point cloud data based on point cloud compression coding (e.g., G-PCC).

The point cloud content providing system according to the embodiments (e.g., the point cloud transmission device 10000 or the point cloud video acquirer 10001) may acquire a point cloud video (20000). The point cloud video is represented by a point cloud belonging to a coordinate system for expressing a 3D space. The point cloud video according to the embodiments may include a Ply (Polygon File format or the Stanford Triangle format) file. When the point cloud video has one or more frames, the acquired point cloud video may include one or more Ply files. The Ply files contain point cloud data, such as point geometry and/or attributes. The geometry includes positions of points. The position of each point may be represented by parameters (e.g., values of the X, Y, and Z axes) representing a three-dimensional coordinate system (e.g., a coordinate system composed of X, Y and Z axes). The attributes include attributes of points (e.g., information about texture, color (in YCbCr or RGB), reflectance r, transparency, etc. of each point). A point has one or more attributes. For example, a point may have an attribute that is a color, or two attributes that are color and reflectance. According to embodiments, the geometry may be called positions, geometry information, geometry data, position information, position data, or the like, and the attribute may be called attributes, attribute information, attribute data, or the like. The point cloud content providing system (e.g., the point cloud transmission device 10000 or the point cloud video acquirer 10001) may secure point cloud data from information (e.g., depth information, color information, etc.) related to the acquisition process of the point cloud video.

The point cloud content providing system (e.g., the transmission device 10000 or the point cloud video encoder 10002) according to the embodiments may encode the point cloud data (20001). The point cloud content providing system may encode the point cloud data based on point cloud compression coding. As described above, the point cloud data may include the geometry information and attribute information about a point. Accordingly, the point cloud content providing system may perform geometry encoding of encoding the geometry and output a geometry bitstream. The point cloud content providing system may perform attribute encoding of encoding attributes and output an attribute bitstream. According to embodiments, the point cloud content providing system may perform the attribute encoding based on the geometry encoding. The geometry bitstream and the attribute bitstream according to the embodiments may be multiplexed and output as one bitstream. The bitstream according to the embodiments may further contain signaling information related to the geometry encoding and attribute encoding.

The point cloud content providing system (e.g., the transmission device 10000 or the transmitter 10003) according to the embodiments may transmit the encoded point cloud data (20002). As illustrated in FIG. 1, the encoded point cloud data may be represented by a geometry bitstream and an attribute bitstream. In addition, the encoded point cloud data may be transmitted in the form of a bitstream together with signaling information related to encoding of the point cloud data (e.g., signaling information related to the geometry encoding and the attribute encoding). The point cloud content providing system may encapsulate a bitstream that carries the encoded point cloud data and transmit the same in the form of a file or segment.

The point cloud content providing system (e.g., the reception device 10004 or the receiver 10005) according to the embodiments may receive the bitstream containing the encoded point cloud data. In addition, the point cloud content providing system (e.g., the reception device 10004 or the receiver 10005) may demultiplex the bitstream.

The point cloud content providing system (e.g., the reception device 10004 or the point cloud video decoder 10005) may decode the encoded point cloud data (e.g., the geometry bitstream, the attribute bitstream) transmitted in the bitstream. The point cloud content providing system (e.g., the reception device 10004 or the point cloud video decoder 10005) may decode the point cloud video data based on the signaling information related to encoding of the point cloud video data contained in the bitstream. The point cloud content providing system (e.g., the reception device 10004 or the point cloud video decoder 10005) may decode the geometry bitstream to reconstruct the positions (geometry) of points. The point cloud content providing system may reconstruct the attributes of the points by decoding the attribute bitstream based on the reconstructed geometry. The point cloud content providing system (e.g., the reception device 10004 or the point cloud video decoder 10005) may reconstruct the point cloud video based on the positions according to the reconstructed geometry and the decoded attributes.

The point cloud content providing system according to the embodiments (e.g., the reception device 10004 or the renderer 10007) may render the decoded point cloud data (20004). The point cloud content providing system (e.g., the reception device 10004 or the renderer 10007) may render the geometry and attributes decoded through the decoding process, using various rendering methods. Points in the point cloud content may be rendered to a vertex having a certain thickness, a cube having a specific minimum size centered on the corresponding vertex position, or a circle centered on the corresponding vertex position. All or part of the rendered point cloud content is provided to the user through a display (e.g., a VR/AR display, a general display, etc.).

The point cloud content providing system (e.g., the reception device 10004) according to the embodiments may secure feedback information (20005). The point cloud content providing system may encode and/or decode point cloud data based on the feedback information. The feedback information and the operation of the point cloud content providing system according to the embodiments are the same as the feedback information and the operation described with reference to FIG. 1, and thus detailed description thereof is omitted.

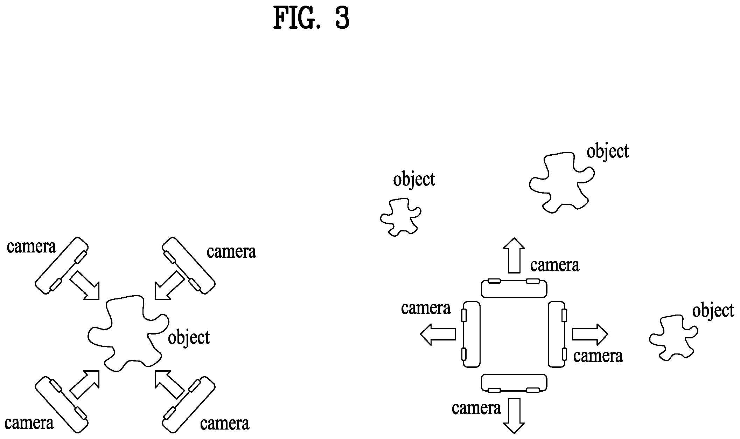

FIG. 3 illustrates an exemplary process of capturing a point cloud video according to embodiments.

FIG. 3 illustrates an exemplary point cloud video capture process of the point cloud content providing system described with reference to FIGS. 1 to 2.

Point cloud content includes a point cloud video (images and/or videos) representing an object and/or environment located in various 3D spaces (e.g., a 3D space representing a real environment, a 3D space representing a virtual environment, etc.). Accordingly, the point cloud content providing system according to the embodiments may capture a point cloud video using one or more cameras (e.g., an infrared camera capable of securing depth information, an RGB camera capable of extracting color information corresponding to the depth information, etc.), a projector (e.g., an infrared pattern projector to secure depth information), a LiDAR, or the like. The point cloud content providing system according to the embodiments may extract the shape of geometry composed of points in a 3D space from the depth information and extract the attributes of each point from the color information to secure point cloud data. An image and/or video according to the embodiments may be captured based on at least one of the inward-facing technique and the outward-facing technique.

The left part of FIG. 3 illustrates the inward-facing technique. The inward-facing technique refers to a technique of capturing images a central object with one or more cameras (or camera sensors) positioned around the central object. The inward-facing technique may be used to generate point cloud content providing a 360-degree image of a key object to the user (e.g., VR/AR content providing a 360-degree image of an object (e.g., a key object such as a character, player, object, or actor) to the user).

The right part of FIG. 3 illustrates the outward-facing technique. The outward-facing technique refers to a technique of capturing images an environment of a central object rather than the central object with one or more cameras (or camera sensors) positioned around the central object. The outward-facing technique may be used to generate point cloud content for providing a surrounding environment that appears from the user's point of view (e.g., content representing an external environment that may be provided to a user of a self-driving vehicle).

As shown in the figure, the point cloud content may be generated based on the capturing operation of one or more cameras. In this case, the coordinate system may differ among the cameras, and accordingly the point cloud content providing system may calibrate one or more cameras to set a global coordinate system before the capturing operation. In addition, the point cloud content providing system may generate point cloud content by synthesizing an arbitrary image and/or video with an image and/or video captured by the above-described capture technique. The point cloud content providing system may not perform the capturing operation described in FIG. 3 when it generates point cloud content representing a virtual space. The point cloud content providing system according to the embodiments may perform post-processing on the captured image and/or video. In other words, the point cloud content providing system may remove an unwanted area (e.g., a background), recognize a space to which the captured images and/or videos are connected, and, when there is a spatial hole, perform an operation of filling the spatial hole.

The point cloud content providing system may generate one piece of point cloud content by performing coordinate transformation on points of the point cloud video secured from each camera. The point cloud content providing system may perform coordinate transformation on the points based on the coordinates of the position of each camera. Accordingly, the point cloud content providing system may generate content representing one wide range, or may generate point cloud content having a high density of points.

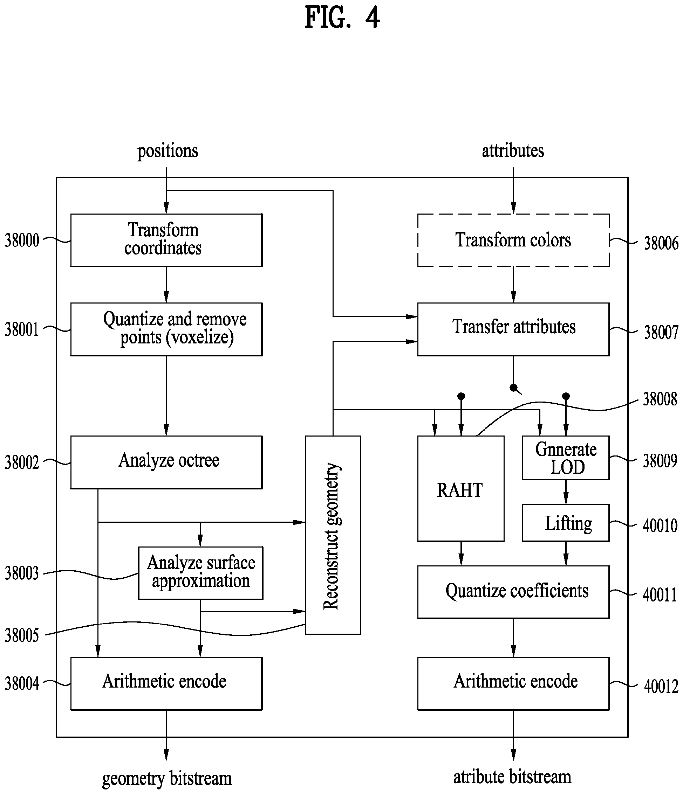

FIG. 4 illustrates an exemplary point cloud encoder according to embodiments.

FIG. 4 shows an example of the point cloud video encoder 10002 of FIG. 1. The point cloud encoder reconstructs and encodes point cloud data (e.g., positions and/or attributes of the points) to adjust the quality of the point cloud content (to, for example, lossless, lossy, or near-lossless) according to the network condition or applications. When the overall size of the point cloud content is large (e.g., point cloud content of 60 Gbps is given for 30 fps), the point cloud content providing system may fail to stream the content in real time. Accordingly, the point cloud content providing system may reconstruct the point cloud content based on the maximum target bitrate to provide the same in accordance with the network environment or the like.

As described with reference to FIGS. 1 and 2, the point cloud encoder may perform geometry encoding and attribute encoding. The geometry encoding is performed before the attribute encoding.

The point cloud encoder according to the embodiments includes a coordinate transformer (Transform coordinates) 40000, a quantizer (Quantize and remove points (voxelize)) 40001, an octree analyzer (Analyze octree) 40002, and a surface approximation analyzer (Analyze surface approximation) 40003, an arithmetic encoder (Arithmetic encode) 40004, a geometry reconstructor (Reconstruct geometry) 40005, a color transformer (Transform colors) 40006, an attribute transformer (Transform attributes) 40007, a RAHT transformer (RAHT) 40008, an LOD generator (Generate LOD) 40009, a lifting transformer (Lifting) 40010, a coefficient quantizer (Quantize coefficients) 40011, and/or an arithmetic encoder (Arithmetic encode) 40012.

The coordinate transformer 40000, the quantizer 40001, the octree analyzer 40002, the surface approximation analyzer 40003, the arithmetic encoder 40004, and the geometry reconstructor 40005 may perform geometry encoding. The geometry encoding according to the embodiments may include octree geometry coding, predictive tree geometry coding, direct coding, trisoup geometry encoding, and entropy encoding. The direct coding and trisoup geometry encoding are applied selectively or in combination. The geometry encoding is not limited to the above-described example.

As shown in the figure, the coordinate transformer 40000 according to the embodiments receives positions and transforms the same into coordinates. For example, the positions may be transformed into position information in a three-dimensional space (e.g., a three-dimensional space represented by an XYZ coordinate system). The position information in the three-dimensional space according to the embodiments may be referred to as geometry information.

The quantizer 40001 according to the embodiments quantizes the geometry. For example, the quantizer 40001 may quantize the points based on a minimum position value of all points (e.g., a minimum value on each of the X, Y, and Z axes). The quantizer 40001 performs a quantization operation of multiplying the difference between the minimum position value and the position value of each point by a preset quantization scale value and then finding the nearest integer value by rounding the value obtained through the multiplication. Thus, one or more points may have the same quantized position (or position value). The quantizer 40001 according to the embodiments performs voxelization based on the quantized positions to reconstruct quantized points. As in the case of a pixel, which is the minimum unit containing 2D image/video information, points of point cloud content (or 3D point cloud video) according to the embodiments may be included in one or more voxels. The term voxel, which is a compound of volume and pixel, refers to a 3D cubic space generated when a 3D space is divided into units (unit=1.0) based on the axes representing the 3D space (e.g., X-axis, Y-axis, and Z-axis). The quantizer 40001 may match groups of points in the 3D space with voxels. According to embodiments, one voxel may include only one point. According to embodiments, one voxel may include one or more points. In order to express one voxel as one point, the position of the center of a voxel may be set based on the positions of one or more points included in the voxel. In this case, attributes of all positions included in one voxel may be combined and assigned to the voxel.

The octree analyzer 40002 according to the embodiments performs octree geometry coding (or octree coding) to present voxels in an octree structure. The octree structure represents points matched with voxels, based on the octal tree structure.

The surface approximation analyzer 40003 according to the embodiments may analyze and approximate the octree. The octree analysis and approximation according to the embodiments is a process of analyzing a region containing a plurality of points to efficiently provide octree and voxelization.

The arithmetic encoder 40004 according to the embodiments performs entropy encoding on the octree and/or the approximated octree. For example, the encoding scheme includes arithmetic encoding. As a result of the encoding, a geometry bitstream is generated.

The color transformer 40006, the attribute transformer 40007, the RAHT transformer 40008, the LOD generator 40009, the lifting transformer 40010, the coefficient quantizer 40011, and/or the arithmetic encoder 40012 perform attribute encoding. As described above, one point may have one or more attributes. The attribute encoding according to the embodiments is equally applied to the attributes that one point has. However, when an attribute (e.g., color) includes one or more elements, attribute encoding is independently applied to each element. The attribute encoding according to the embodiments includes color transform coding, attribute transform coding, region adaptive hierarchical transform (RAHT) coding, interpolation-based hierarchical nearest-neighbor prediction (prediction transform) coding, and interpolation-based hierarchical nearest-neighbor prediction with an update/lifting step (lifting transform) coding. Depending on the point cloud content, the RAHT coding, the prediction transform coding and the lifting transform coding described above may be selectively used, or a combination of one or more of the coding schemes may be used. The attribute encoding according to the embodiments is not limited to the above-described example.

The color transformer 40006 according to the embodiments performs color transform coding of transforming color values (or textures) included in the attributes. For example, the color transformer 40006 may transform the format of color information (for example, from RGB to YCbCr). The operation of the color transformer 40006 according to embodiments may be optionally applied according to the color values included in the attributes.

The geometry reconstructor 40005 according to the embodiments reconstructs (decompresses) the octree and/or the approximated octree. The geometry reconstructor 40005 reconstructs the octree/voxels based on the result of analyzing the distribution of points. The reconstructed octree/voxels may be referred to as reconstructed geometry (restored geometry).

The attribute transformer 40007 according to the embodiments performs attribute transformation to transform the attributes based on the reconstructed geometry and/or the positions on which geometry encoding is not performed. As described above, since the attributes are dependent on the geometry, the attribute transformer 40007 may transform the attributes based on the reconstructed geometry information. For example, based on the position value of a point included in a voxel, the attribute transformer 40007 may transform the attribute of the point at the position. As described above, when the position of the center of a voxel is set based on the positions of one or more points included in the voxel, the attribute transformer 40007 transforms the attributes of the one or more points. When the trisoup geometry encoding is performed, the attribute transformer 40007 may transform the attributes based on the trisoup geometry encoding.

The attribute transformer 40007 may perform the attribute transformation by calculating the average of attributes or attribute values of neighboring points (e.g., color or reflectance of each point) within a specific position/radius from the position (or position value) of the center of each voxel. The attribute transformer 40007 may apply a weight according to the distance from the center to each point in calculating the average. Accordingly, each voxel has a position and a calculated attribute (or attribute value).

The attribute transformer 40007 may search for neighboring points existing within a specific position/radius from the position of the center of each voxel based on the K-D tree or the Morton code. The K-D tree is a binary search tree and supports a data structure capable of managing points based on the positions such that nearest neighbor search (NNS) can be performed quickly. The Morton code is generated by presenting coordinates (e.g., (x, y, z)) representing 3D positions of all points as bit values and mixing the bits. For example, when the coordinates representing the position of a point are (5, 9, 1), the bit values for the coordinates are (0101, 1001, 0001). Mixing the bit values according to the bit index in order of z, y, and x yields 010001000111. This value is expressed as a decimal number of 1095. That is, the Morton code value of the point having coordinates (5, 9, 1) is 1095. The attribute transformer 40007 may order the points based on the Morton code values and perform NNS through a depth-first traversal process. After the attribute transformation operation, the K-D tree or the Morton code is used when the NNS is needed in another transformation process for attribute coding.

As shown in the figure, the transformed attributes are input to the RAHT transformer 40008 and/or the LOD generator 40009.

The RAHT transformer 40008 according to the embodiments performs RAHT coding for predicting attribute information based on the reconstructed geometry information. For example, the RAHT transformer 40008 may predict attribute information of a node at a higher level in the octree based on the attribute information associated with a node at a lower level in the octree.

The LOD generator 40009 according to the embodiments generates a level of detail (LOD) to perform prediction transform coding. The LOD according to the embodiments is a degree of detail of point cloud content. As the LOD value decrease, it indicates that the detail of the point cloud content is degraded. As the LOD value increases, it indicates that the detail of the point cloud content is enhanced. Points may be classified by the LOD.

The lifting transformer 40010 according to the embodiments performs lifting transform coding of transforming the attributes a point cloud based on weights. As described above, lifting transform coding may be optionally applied.

The coefficient quantizer 40011 according to the embodiments quantizes the attribute-coded attributes based on coefficients.

The arithmetic encoder 40012 according to the embodiments encodes the quantized attributes based on arithmetic coding.

Although not shown in the figure, the elements of the point cloud encoder of FIG. 4 may be implemented by hardware including one or more processors or integrated circuits configured to communicate with one or more memories included in the point cloud providing device, software, firmware, or a combination thereof. The one or more processors may perform at least one of the operations and/or functions of the elements of the point cloud encoder of FIG. 4 described above. Additionally, the one or more processors may operate or execute a set of software programs and/or instructions for performing the operations and/or functions of the elements of the point cloud encoder of FIG. 4. The one or more memories according to the embodiments may include a high speed random access memory, or include a non-volatile memory (e.g., one or more magnetic disk storage devices, flash memory devices, or other non-volatile solid-state memory devices).

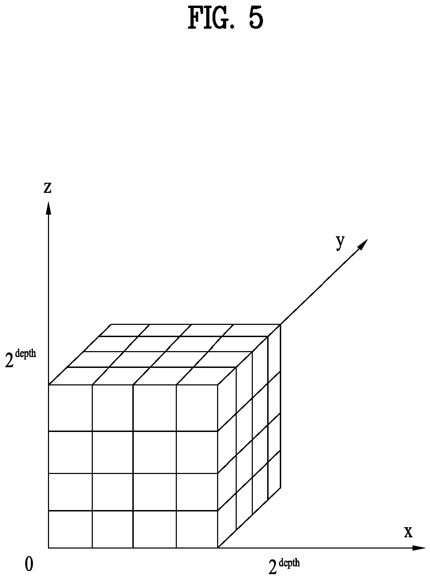

FIG. 5 shows an example of voxels according to embodiments.

FIG. 5 shows voxels positioned in a 3D space represented by a coordinate system composed of three axes, which are the X-axis, the Y-axis, and the Z-axis. As described with reference to FIG. 4, the point cloud encoder (e.g., the quantizer 40001) may perform voxelization. Voxel refers to a 3D cubic space generated when a 3D space is divided into units (unit=1.0) based on the axes representing the 3D space (e.g., X-axis, Y-axis, and Z-axis). FIG. 5 shows an example of voxels generated through an octree structure in which a cubical axis-aligned bounding box defined by two poles (0, 0, 0) and (2d, 2d, 2d) is recursively subdivided. One voxel includes at least one point. The spatial coordinates of a voxel may be estimated from the positional relationship with a voxel group. As described above, a voxel has an attribute (such as color or reflectance) like pixels of a 2D image/video. The details of the voxel are the same as those described with reference to FIG. 4, and therefore a description thereof is omitted.

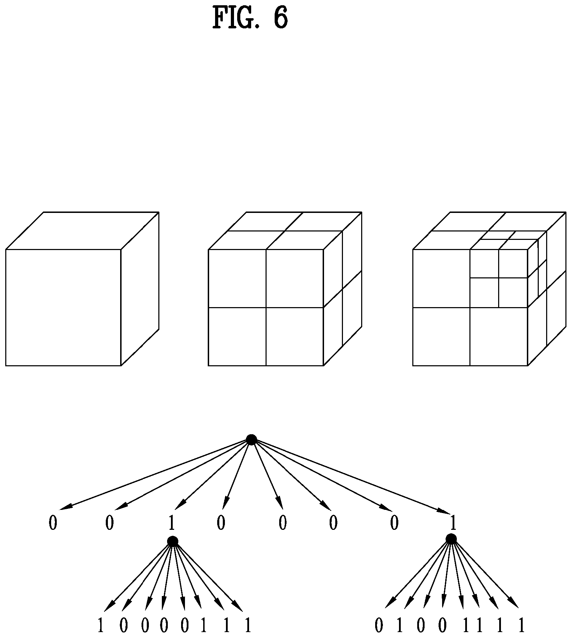

FIG. 6 shows an example of an octree and occupancy code according to embodiments.

As described with reference to FIGS. 1 to 4, the point cloud content providing system (point cloud video encoder 10002) or the point cloud encoder (e.g., the octree analyzer 40002) performs octree geometry coding (or octree coding) based on an octree structure to efficiently manage the region and/or position of the voxel.

The upper part of FIG. 6 shows an octree structure. The 3D space of the point cloud content according to the embodiments is represented by axes (e.g., X-axis, Y-axis, and Z-axis) of the coordinate system. The octree structure is created by recursive subdividing of a cubical axis-aligned bounding box defined by two poles (0, 0, 0) and $(2^d, 2^d, 2^d)$. Here, $2^d$ may be set to a value constituting the smallest bounding box surrounding all points of the point cloud content (or point cloud video). Here, d denotes the depth of the octree. The value of d is determined in the following equation. In the following equation, $(x^{int}_n, y^{int}_n, z^{int}_n)$ denotes the positions (or position values) of quantized points.

$$d = \text{Ceil}\left(\text{Log2}\left(\text{Max}\left(x^{int}_n, y^{int}_n, z^{in}_n, n = 1, \dots, N\right) + 1\right)\right)$$

As shown in the middle of the upper part of FIG. 6, the entire 3D space may be divided into eight spaces according to partition. Each divided space is represented by a cube with six faces. As shown in the upper right of FIG. 6, each of the eight spaces is divided again based on the axes of the coordinate system (e.g., X-axis, Y-axis, and Z-axis). Accordingly, each space is divided into eight smaller spaces. The divided smaller space is also represented by a cube with six faces. This partitioning scheme is applied until the leaf node of the octree becomes a voxel.

The lower part of FIG. 6 shows an octree occupancy code. The occupancy code of the octree is generated to indicate whether each of the eight divided spaces generated by dividing one space contains at least one point. Accordingly, a single occupancy code is represented by eight child nodes. Each child node represents the occupancy of a divided space, and the child node has a value in 1 bit. Accordingly, the occupancy code is represented as an 8-bit code. That is, when at least one point is contained in the space corresponding to a child node, the node is assigned a value of 1. When no point is contained in the space corresponding to the child node (the space is empty), the node is assigned a value of 0. Since the occupancy code shown in FIG. 6 is 00100001, it indicates that the spaces corresponding to the third child node and the eighth child node among the eight child nodes each contain at least one point. As shown in the figure, each of the third child node and the eighth child node has eight child nodes, and the child nodes are represented by an 8-bit occupancy code. The figure shows that the occupancy code of the third child node is 10000111, and the occupancy code of the eighth child node is 01001111. The point cloud encoder (e.g., the arithmetic encoder 40004) according to the embodiments may perform entropy encoding on the occupancy codes. In order to increase the compression efficiency, the point cloud encoder may perform intra/inter-coding on the occupancy codes. The reception device (e.g., the reception device 10004 or the point cloud video decoder 10006) according to the embodiments reconstructs the octree based on the occupancy codes.

The point cloud encoder (e.g., the point cloud encoder of FIG. 4 or the octree analyzer 40002) according to the embodiments may perform voxelization and octree coding to store the positions of points. However, points are not always evenly distributed in the 3D space, and accordingly there may be a specific region in which fewer points are present. Accordingly, it is inefficient to perform voxelization for the entire 3D space. For example, when a specific region contains few points, voxelization does not need to be performed in the specific region.

Accordingly, for the above-described specific region (or a node other than the leaf node of the octree), the point cloud encoder according to the embodiments may skip voxelization and perform direct coding to directly code the positions of points included in the specific region. The coordinates of a direct coding point according to the embodiments are referred to as direct coding mode (DCM). The point cloud encoder according to the embodiments may also perform trisoup geometry encoding, which is to reconstruct the positions of the points in the specific region (or node) based on voxels, based on a surface model. The trisoup geometry encoding is geometry encoding that represents an object as a series of triangular meshes. Accordingly, the point cloud decoder may generate a point cloud from the mesh surface. The direct coding and trisoup geometry encoding according to the embodiments may be selectively performed. In addition, the direct coding and trisoup geometry encoding according to the embodiments may be performed in combination with octree geometry coding (or octree coding).

To perform direct coding, the option to use the direct mode for applying direct coding should be activated. A node to which direct coding is to be applied is not a leaf node, and points less than a threshold should be present within a specific node. In addition, the total number of points to which direct coding is to be applied should not exceed a preset threshold. When the conditions above are satisfied, the point cloud encoder (or the arithmetic encoder 40004) according to the embodiments may perform entropy coding on the positions (or position values) of the points.

The point cloud encoder (e.g., the surface approximation analyzer 40003) according to the embodiments may determine a specific level of the octree (a level less than the depth d of the octree), and the surface model may be used staring with that level to perform trisoup geometry encoding to reconstruct the positions of points in the region of the node based on voxels (Trisoup mode). The point cloud encoder according to the embodiments may specify a level at which trisoup geometry encoding is to be applied. For example, when the specific level is equal to the depth of the octree, the point cloud encoder does not operate in the trisoup mode. In other words, the point cloud encoder according to the embodiments may operate in the trisoup mode only when the specified level is less than the value of depth of the octree. The 3D cube region of the nodes at the specified level according to the embodiments is called a block. One block may include one or more voxels. The block or voxel may correspond to a brick. Geometry is represented as a surface within each block. The surface according to embodiments may intersect with each edge of a block at most once.

One block has 12 edges, and accordingly there are at least 12 intersections in one block. Each intersection is called a vertex (or apex). A vertex present along an edge is detected when there is at least one occupied voxel adjacent to the edge among all blocks sharing the edge. The occupied voxel according to the embodiments refers to a voxel containing a point. The position of the vertex detected along the edge is the average position along the edge of all voxels adjacent to the edge among all blocks sharing the edge.

Once the vertex is detected, the point cloud encoder according to the embodiments may perform entropy encoding on the starting point (x, y, z) of the edge, the direction vector ($\Delta$x, $\Delta$y, $\Delta$z) of the edge, and the vertex position value (relative position value within the edge). When the trisoup geometry encoding is applied, the point cloud encoder according to the embodiments (e.g., the geometry reconstructor 40005) may generate restored geometry (reconstructed geometry) by performing the triangle reconstruction, up-sampling, and voxelization processes.

The vertices positioned at the edge of the block determine a surface that passes through the block. The surface according to the embodiments is a non-planar polygon. In the triangle reconstruction process, a surface represented by a triangle is reconstructed based on the starting point of the edge, the direction vector of the edge, and the position values of the vertices. The triangle reconstruction process is performed by: i) calculating the centroid value of each vertex, ii) subtracting the center value from each vertex value, and iii) estimating the sum of the squares of the values obtained by the subtraction.

$$\text{i) } \begin{bmatrix} \mu_x \\ \mu_y \\ \mu_z \end{bmatrix} = \frac{1}{n}\sum_{i=1}^{n}\begin{bmatrix} x_i \\ y_i \\ z_i \end{bmatrix}; \quad \text{ii) } \begin{bmatrix} \bar{x}_i \\ \bar{y}_i \\ \bar{z}_i \end{bmatrix} = \begin{bmatrix} x_i \\ y_i \\ z_i \end{bmatrix} - \begin{bmatrix} \mu_x \\ \mu_y \\ \mu_z \end{bmatrix}; \quad \text{iii) } \begin{bmatrix} \sigma_x^2 \\ \sigma_y^2 \\ \sigma_z^2 \end{bmatrix} = \sum_{i=1}^{n}\begin{bmatrix} \bar{x}_i^2 \\ \bar{y}_i^2 \\ \bar{z}_i^2 \end{bmatrix}$$

The minimum value of the sum is estimated, and the projection process is performed according to the axis with the minimum value. For example, when the element x is the minimum, each vertex is projected on the x-axis with respect to the center of the block, and projected on the (y, z) plane. When the values obtained through projection on the (y, z) plane are (ai, bi), the value of $\theta$ is estimated through atan2(bi, ai), and the vertices are ordered based on the value of $\theta$. The table below shows a combination of vertices for creating a triangle according to the number of the vertices. The vertices are ordered from 1 to n. The table below shows that for four vertices, two triangles may be constructed according to combinations of vertices. The first triangle may consist of vertices 1, 2, and 3 among the ordered vertices, and the second triangle may consist of vertices 3, 4, and 1 among the ordered vertices.

Triangles formed from vertices ordered 1,...,n

n triangles
3 (1,2,3)
4 (1,2,3), (3,4,1)
5 (1,2,3), (3,4,5), (5,1,3)
6 (1,2,3), (3,4,5), (5,6,1), (1,3,5)
7 (1,2,3), (3,4,5), (5,6,7), (7,1,3), (3,5,7)
8 (1,2,3), (3,4,5), (5,6,7), (7,8,1), (1,3,5), (5,7,1)
9 (1,2,3), (3,4,5), (5,6,7), (7,8,9), (9,1,3), (3,5,7), (7,9,3)

10 (1,2,3), (3,4,5), (5,6,7), (7,8,9), (9,10,1), (1,3,5), (5,7,9), (9,1,5)
11 (1,2,3), (3,4,5), (5,6,7), (7,8,9), (9,10,11), (11,1,3), (3,5,7), (7,9,11), (11,3,7)
12 (1,2,3), (3,4,5), (5,6,7), (7,8,9), (9,10,11), (11,12,1), (1,3,5), (5,7,9), (9,11,1), (1,5,9)

The upsampling process is performed to add points in the middle along the edge of the triangle and perform voxelization. The added points are generated based on the upsampling factor and the width of the block. The added points are called refined vertices. The point cloud encoder according to the embodiments may voxelize the refined vertices. In addition, the point cloud encoder may perform attribute encoding based on the voxelized positions (or position values).

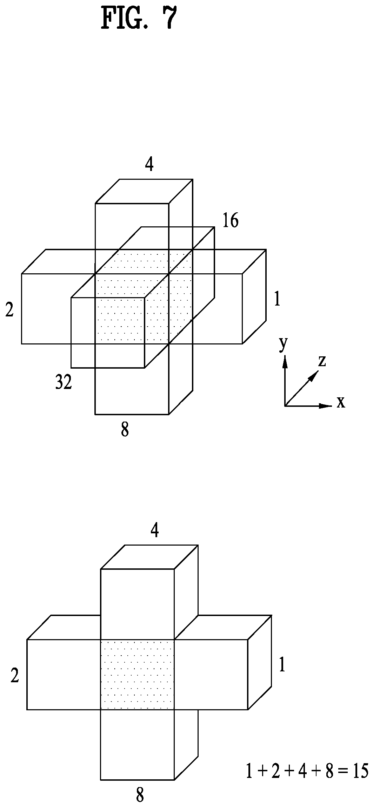

FIG. 7 shows an example of a neighbor node pattern according to embodiments.

In order to increase the compression efficiency of the point cloud video, the point cloud encoder according to the embodiments may perform entropy coding based on context adaptive arithmetic coding.

As described with reference to FIGS. 1 to 6, the point cloud content providing system or the point cloud encoder (e.g., the point cloud video encoder 10002, the point cloud encoder or arithmetic encoder 40004 of FIG. 4) may perform entropy coding on the occupancy code immediately. In addition, the point cloud content providing system or the point cloud encoder may perform entropy encoding (intra encoding) based on the occupancy code of the current node and the occupancy of neighboring nodes, or perform entropy encoding (inter encoding) based on the occupancy code of the previous frame. A frame according to embodiments represents a set of point cloud videos generated at the same time. The compression efficiency of intra encoding/inter encoding according to the embodiments may depend on the number of neighboring nodes that are referenced. When the bits increase, the operation becomes complicated, but the encoding may be biased to one side, which may increase the compression efficiency. For example, when a 3-bit context is given, coding needs to be performed using 23 = 8 methods. The part divided for coding affects the complexity of implementation. Accordingly, it is necessary to meet an appropriate level of compression efficiency and complexity.

FIG. 7 illustrates a process of obtaining an occupancy pattern based on the occupancy of neighbor nodes. The point cloud encoder according to the embodiments determines occupancy of neighbor nodes of each node of the octree and obtains a value of a neighbor pattern. The neighbor node pattern is used to infer the occupancy pattern of the node. The left part of FIG. 7 shows a cube corresponding to a node (a cube positioned in the middle) and six cubes (neighbor nodes) sharing at least one face with the cube. The nodes shown in the figure are nodes of the same depth. The numbers shown in the figure represent weights (1, 2, 4, 8, 16, and 32) associated with the six nodes, respectively. The weights are assigned sequentially according to the positions of neighboring nodes.

The right part of FIG. 7 shows neighbor node pattern values. A neighbor node pattern value is the sum of values multiplied by the weight of an occupied neighbor node (a neighbor node having a point). Accordingly, the neighbor node pattern values are 0 to 63. When the neighbor node pattern value is 0, it indicates that there is no node having a point (no occupied node) among the neighbor nodes of the node. When the neighbor node pattern value is 63, it indicates that all neighbor nodes are occupied nodes. As shown in the figure, since neighbor nodes to which weights 1, 2, 4, and 8 are assigned are occupied nodes, the neighbor node pattern value is 15, the sum of 1, 2, 4, and 8. The point cloud encoder may perform coding according to the neighbor node pattern value (for example, when the neighbor node pattern value is 63, 64 kinds of coding may be performed). According to embodiments, the point cloud encoder may reduce coding complexity by changing a neighbor node pattern value (for example, based on a table by which 64 is changed to 10 or 6).

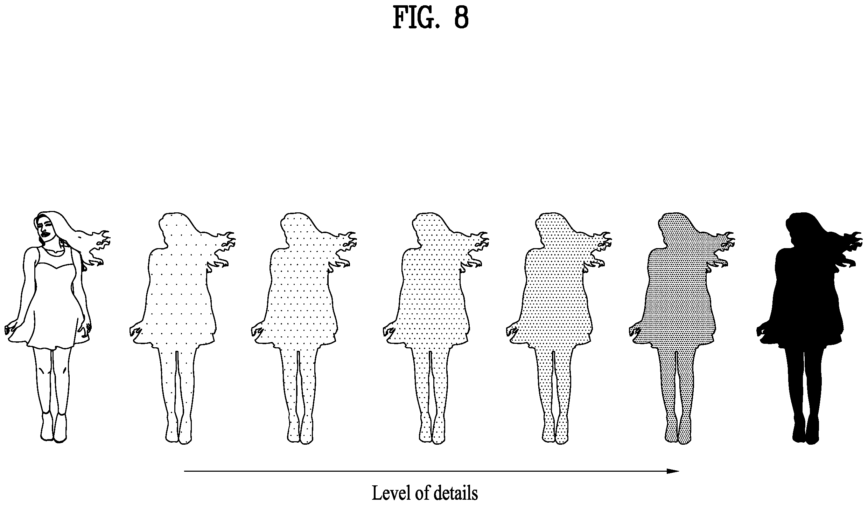

FIG. 8 illustrates an example of point configuration in each LOD according to embodiments.

As described with reference to FIGS. 1 to 7, encoded geometry is reconstructed (decompressed) before attribute encoding is performed. When direct coding is applied, the geometry reconstruction operation may include changing the placement of direct coded points (e.g., placing the direct coded points in front of the point cloud data). When trisoup geometry encoding is applied, the geometry reconstruction process is performed through triangle reconstruction, up-sampling, and voxelization. Since the attribute depends on the geometry, attribute encoding is performed based on the reconstructed geometry.

The point cloud encoder (e.g., the LOD generator 40009) may classify (or reorganize) points by LOD. The figure shows the point cloud content corresponding to LODs. The leftmost picture in the figure represents original point cloud content. The second picture from the left of the figure represents distribution of the points in the lowest LOD, and the rightmost picture in the figure represents distribution of the points in the highest LOD. That is, the points in the lowest LOD are sparsely distributed, and the points in the highest LOD are densely distributed. That is, as the LOD rises in the direction pointed by the arrow indicated at the bottom of the figure, the space (or distance) between points is narrowed.

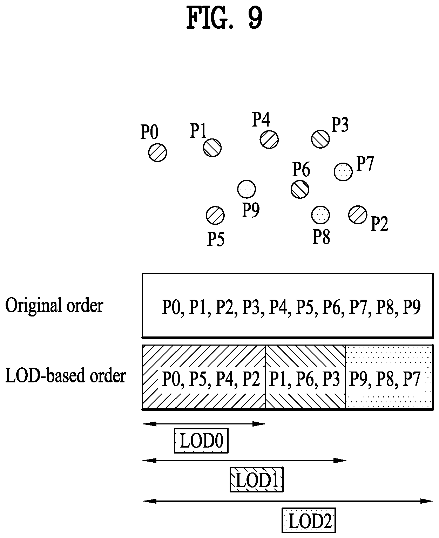

FIG. 9 illustrates an example of point configuration for each LOD according to embodiments.

As described with reference to FIGS. 1 to 8, the point cloud content providing system, or the point cloud encoder (e.g., the point cloud video encoder 10002, the point cloud encoder of FIG. 4, or the LOD generator 40009) may generates an LOD. The LOD is generated by reorganizing the points into a set of refinement levels according to a set LOD distance value (or a set of Euclidean distances). The LOD generation process is performed not only by the point cloud encoder, but also by the point cloud decoder.

The upper part of FIG. 9 shows examples (P0 to P9) of points of the point cloud content distributed in a 3D space.

In FIG. 9, the original order represents the order of points P0 to P9 before LOD generation. In FIG. 9, the LOD based order represents the order of points according to the LOD generation. Points are reorganized by LOD. Also, a high LOD contains the points belonging to lower LODs. As shown in FIG. 9, LOD0 contains P0, P5, P4 and P2. LOD1 contains the points of LOD0, P1, P6 and P3. LOD2 contains the points of LOD0, the points of LOD1, P9, P8 and P7.

As described with reference to FIG. 4, the point cloud encoder according to the embodiments may perform prediction transform coding, lifting transform coding, and RAHT transform coding selectively or in combination.

The point cloud encoder according to the embodiments may generate a predictor for points to perform prediction transform coding for setting a predicted attribute (or predicted attribute value) of each point. That is, N predictors may be generated for N points. The predictor according to the embodiments may calculate a weight (=1/distance) based on the LOD value of each point, indexing information about neighboring points present within a set distance for each LOD, and a distance to the neighboring points.

The predicted attribute (or attribute value) according to the embodiments is set to the average of values obtained by multiplying the attributes (or attribute values) (e.g., color, reflectance, etc.) of neighbor points set in the predictor of each point by a weight (or weight value) calculated based on the distance to each neighbor point. The point cloud encoder according to the embodiments (e.g., the coefficient quantizer 40011) may quantize and inversely quantize the residuals (which may be called residual attributes, residual attribute values, attribute prediction residuals, attribute residuals, or the like) obtained by subtracting a predicted attribute (attribute value) from the attribute (attribute value) of each point. The quantization process is configured as shown in the following table.

TABLE 1 Attribute prediction residuals quantization pseudo code

```
int PCCQuantization(int value, int quantStep) {

if( value >=0) {

return floor(value / quantStep + 1.0 / 3.0);

} else {

return -floor(-value / quantStep + 1.0 / 3.0);

}

}
```

TABLE 2 Attribute prediction residuals inverse quantization pseudo code

```
int PCCInverseQuantization(int value, int quantStep) {

if( quantStep ==0) {

return value;

} else {
```

```
return value * quantStep;

}

}
```

When the predictor of each point has neighbor points, the point cloud encoder (e.g., the arithmetic encoder 40012) according to the embodiments may perform entropy coding on the quantized and inversely quantized residual values as described above. When the predictor of each point has no neighbor point, the point cloud encoder according to the embodiments (e.g., the arithmetic encoder 40012) may perform entropy coding on the attributes of the corresponding point without performing the above-described operation.

The point cloud encoder according to the embodiments (e.g., the lifting transformer 40010) may generate a predictor of each point, set the calculated LOD and register neighbor points in the predictor, and set weights according to the distances to neighbor points to perform lifting transform coding. The lifting transform coding according to the embodiments is similar to the above-described prediction transform coding, but differs therefrom in that weights are cumulatively applied to attribute values. The process of cumulatively applying weights to the attribute values according to embodiments is configured as follows.

1) Create an array Quantization Weight (QW) for storing the weight value of each point. The initial value of all elements of QW is 1.0. Multiply the QW values of the predictor indexes of the neighbor nodes registered in the predictor by the weight of the predictor of the current point, and add the values obtained by the multiplication.

2) Lift prediction process: Subtract the value obtained by multiplying the attribute value of the point by the weight from the existing attribute value to calculate a predicted attribute value.

3) Create temporary arrays called updateweight and update and initialize the temporary arrays to zero.

4) Cumulatively add the weights calculated by multiplying the weights calculated for all predictors by a weight stored in the QW corresponding to a predictor index to the updateweight array as indexes of neighbor nodes. Cumulatively add, to the update array, a value obtained by multiplying the attribute value of the index of a neighbor node by the calculated weight.

5) Lift update process: Divide the attribute values of the update array for all predictors by the weight value of the updateweight array of the predictor index, and add the existing attribute value to the values obtained by the division.

6) Calculate predicted attributes by multiplying the attribute values updated through the lift update process by the weight updated through the lift prediction process (stored in the QW) for all predictors. The point cloud encoder (e.g., coefficient quantizer 40011) according to the embodiments quantizes the predicted attribute values. In addition, the point cloud encoder (e.g., the arithmetic encoder 40012) performs entropy coding on the quantized attribute values.

The point cloud encoder (e.g., the RAHT transformer 40008) according to the embodiments may perform RAHT transform coding in which attributes of nodes of a higher level are predicted using the attributes associated with nodes of a lower level in the octree. RAHT transform coding is an example of attribute intra coding through an octree backward scan. The point cloud encoder according to the embodiments scans the entire region from the voxel and repeats the merging process of merging the voxels into a larger block at each step until the root node is reached. The merging process according to the embodiments is performed only on the occupied nodes. The merging process is not performed on the empty node. The merging process is performed on an upper node immediately above the empty node.

The equation below represents a RAHT transformation matrix. In the equation, $g_{l_{x,y,z}}$ denotes the average attribute value of voxels at level 1. $g_{l_{x,y,z}}$ may be calculated based on $g_{l+1_{2x,y,z}}$ and $g_{l+1_{2x+1,y,z}}$. The weights for $g_{l_{2x,y,z}}$ and $g_{l_{2x+1,y,z}}$ are w1 = $w_{l_{2x,y,z}}$ and w2 = $w_{l_{2x+1,y,z}}$.

$$\begin{bmatrix} g_{l-1\,x,y,z} \\ h_{l-1\,x,y,z} \end{bmatrix} = T_{w1\,w2} \begin{bmatrix} g_{l\,2x,y,z} \\ g_{l\,2x+1,y,z} \end{bmatrix}, \quad T_{w1\,w2} = \frac{1}{\sqrt{w1+w2}} \begin{bmatrix} \sqrt{w1} & \sqrt{w2} \\ -\sqrt{w2} & \sqrt{w1} \end{bmatrix}$$

Here, $g_{l-1_{x,y,z}}$ is a low-pass value and is used in the merging process at the next higher level. $h_{l-1_{x,y,z}}$ denotes high-pass coefficients. The high-pass coefficients at each step are quantized and subjected to entropy coding (e.g., encoding by the arithmetic encoder 400012). The weights are calculated as $w_{l-1_{x,y,z}} = w_{l_{2x,y,z}} + w_{l_{2x+1,y,z}}$. The root node is created through the $g_{1_{0,0,0}}$ and $g_{1_{0,0,1}}$ as follows.

$$\begin{bmatrix} gDC \\ h_{0_{0,0,0}} \end{bmatrix} = T_{w1000\,w1001} \begin{bmatrix} g_{1\,0,0,0z} \\ g_{1_{0,0,1}} \end{bmatrix}$$

The value of gDC is also quantized and subjected to entropy coding like the high-pass coefficients.

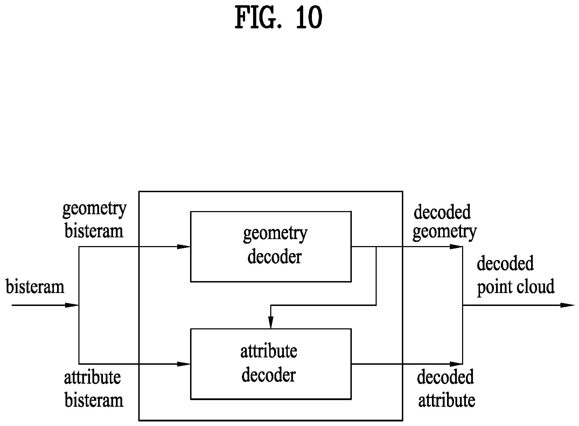

FIG. 10 illustrates a point cloud decoder according to embodiments.

The point cloud decoder illustrated in FIG. 10 is an example of the point cloud video decoder 10006 described in FIG. 1, and may perform the same or similar operations as the operations of the point cloud video decoder 10006 illustrated in FIG. 1. As shown in the figure, the point cloud decoder may receive a geometry bitstream and an attribute bitstream contained in one or more bitstreams. The point cloud decoder includes a geometry decoder and an attribute decoder. The geometry decoder performs geometry decoding on the geometry bitstream and outputs decoded geometry. The attribute decoder performs attribute decoding based on the decoded geometry and the attribute bitstream, and outputs decoded attributes. The decoded geometry and decoded attributes are used to reconstruct point cloud content (a decoded point cloud).

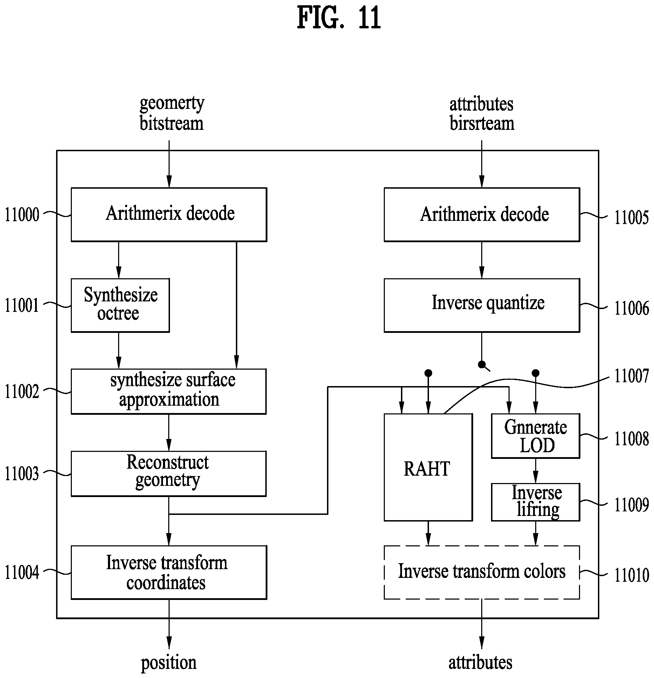

FIG. 11 illustrates a point cloud decoder according to embodiments.

The point cloud decoder illustrated in FIG. 11 is an example of the point cloud decoder illustrated in FIG. 10, and may perform a decoding operation, which is a reverse process to the encoding operation of the point cloud encoder illustrated in FIGS. 1 to 9.

As described with reference to FIGS. 1 and 10, the point cloud decoder may perform geometry decoding and attribute decoding. The geometry decoding is performed before the attribute decoding.

The point cloud decoder according to the embodiments includes an arithmetic decoder (Arithmetic decode) 11000, an octree synthesizer (Synthesize octree) 11001, a surface approximation synthesizer (Synthesize surface approximation) 11002, and a geometry reconstructor (Reconstruct geometry) 11003, a coordinate inverse transformer (Inverse transform coordinates) 11004, an arithmetic decoder (Arithmetic decode) 11005, an inverse quantizer (Inverse quantize) 11006, a RAHT transformer 11007, an LOD generator (Generate LOD) 11008, an inverse lifter (inverse lifting) 11009, and/or a color inverse transformer (Inverse transform colors) 11010.

The arithmetic decoder 11000, the octree synthesizer 11001, the surface approximation synthesizer 11002, and the geometry reconstructor 11003, and the coordinate inverse transformer 11004 may perform geometry decoding. The geometry decoding according to the embodiments may include direct decoding and trisoup geometry decoding. The direct coding and trisoup geometry decoding are selectively applied. The geometry decoding is not limited to the above-described example, and is performed as a reverse process to the geometry encoding described with reference to FIGS. 1 to 9.

The arithmetic decoder 11000 according to the embodiments decodes the received geometry bitstream based on the arithmetic coding. The operation of the arithmetic decoder 11000 corresponds to the reverse process to the arithmetic encoder 40004.

The octree synthesizer 11001 according to the embodiments may generate an octree by acquiring an occupancy code from the decoded geometry bitstream (or information on the geometry secured as a result of decoding). The occupancy code is configured as described in detail with reference to FIGS. 1 to 9.

When the trisoup geometry encoding is applied, the surface approximation synthesizer 11002 according to the embodiments may synthesize a surface based on the decoded geometry and/or the generated octree.

The geometry reconstructor 11003 according to the embodiments may regenerate geometry based on the surface and/or the decoded geometry. As described with reference to FIGS. 1 to 9, direct coding and trisoup geometry encoding are selectively applied. Accordingly, the geometry reconstructor 11003 directly imports and adds position information about the points to which direct coding is applied. When the trisoup geometry encoding is applied, the geometry reconstructor 11003 may reconstruct the geometry by performing the reconstruction operations of the geometry reconstructor 40005, for example, triangle reconstruction, up-sampling, and voxelization. Details are the same as those described with reference to FIG. 6, and thus description thereof is omitted. The reconstructed geometry may include a point cloud picture or frame that does not contain attributes.

The coordinate inverse transformer 11004 according to the embodiments may acquire positions of the points by transforming the coordinates based on the reconstructed geometry.

The arithmetic decoder 11005, the inverse quantizer 11006, the RAHT transformer 11007, the LOD generator 11008, the inverse lifter 11009, and/or the color inverse transformer 11010 may perform the attribute decoding described with reference to FIG. 10. The attribute decoding according to the embodiments includes region adaptive hierarchical transform (RAHT) decoding, interpolation-based hierarchical nearest-neighbor prediction (prediction transform) decoding, and interpolation-based hierarchical nearest-neighbor prediction with an update/lifting step (lifting transform) decoding. The three decoding schemes described above may be used selectively, or a combination of one or more decoding schemes may be used. The attribute decoding according to the embodiments is not limited to the above-described example.

The arithmetic decoder 11005 according to the embodiments decodes the attribute bitstream by arithmetic coding.

The inverse quantizer 11006 according to the embodiments inversely quantizes the information about the decoded attribute bitstream or attributes secured as a result of the decoding, and outputs the inversely quantized attributes (or attribute values). The inverse quantization may be selectively applied based on the attribute encoding of the point cloud encoder.

According to embodiments, the RAHT transformer 11007, the LOD generator 11008, and/or the inverse lifter 11009 may process the reconstructed geometry and the inversely quantized attributes. As described above, the RAHT transformer 11007, the LOD generator 11008, and/or the inverse lifter 11009 may selectively perform a decoding operation corresponding to the encoding of the point cloud encoder.

The color inverse transformer 11010 according to the embodiments performs inverse transform coding to inversely transform a color value (or texture) included in the decoded attributes. The operation of the color inverse transformer 11010 may be selectively performed based on the operation of the color transformer 40006 of the point cloud encoder.

Although not shown in the figure, the elements of the point cloud decoder of FIG. 11 may be implemented by hardware including one or more processors or integrated circuits configured to communicate with one or more memories included in the point cloud providing device, software, firmware, or a combination thereof. The one or more processors may perform at least one or more of the operations and/or functions of the elements of the point cloud decoder of FIG. 11 described above. Additionally, the one or more processors may operate or execute a set of software programs and/or instructions for performing the operations and/or functions of the elements of the point cloud decoder of FIG. 11.

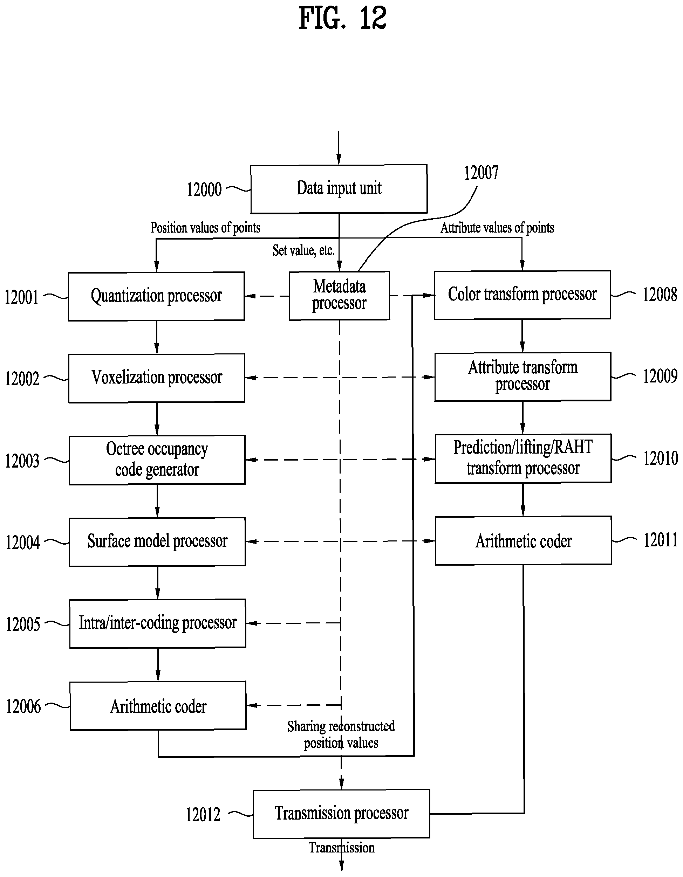

FIG. 12 illustrates a transmission device according to embodiments.

The transmission device shown in FIG. 12 is an example of the transmission device 10000 of FIG. 1 (or the point cloud encoder of FIG. 4). The transmission device illustrated in FIG. 12 may perform one or more of the operations and methods the same as or similar to those of the point cloud encoder described with reference to FIGS. 1 to 9. The transmission device according to the embodiments may include a data input unit 12000, a quantization processor 12001, a voxelization processor 12002, an octree occupancy code generator 12003, a surface model processor 12004, an intra/inter-coding processor 12005, an arithmetic coder 12006, a metadata processor 12007, a color transform processor 12008, an attribute transform processor 12009, a prediction/lifting/RAHT transform processor 12010, an arithmetic coder 12011 and/or a transmission processor 12012.

The data input unit 12000 according to the embodiments receives or acquires point cloud data. The data input unit 12000 may perform an operation and/or acquisition method the same as or similar to the operation and/or acquisition method of the point cloud video acquirer 10001 (or the acquisition process 20000 described with reference to FIG. 2).

The data input unit 12000, the quantization processor 12001, the voxelization processor 12002, the octree occupancy code generator 12003, the surface model processor 12004, the intra/inter-coding processor 12005, and the arithmetic coder 12006 perform geometry encoding. The geometry encoding according to the embodiments is the same as or similar to the geometry encoding described with reference to FIGS. 1 to 9, and thus a detailed description thereof is omitted.

The quantization processor 12001 according to the embodiments quantizes geometry (e.g., position values of points). The operation and/or quantization of the quantization processor 12001 is the same as or similar to the operation and/or quantization of the quantizer 40001 described with reference to FIG. 4. Details are the same as those described with reference to FIGS. 1 to 9.

The voxelization processor 12002 according to the embodiments voxelizes the quantized position values of the points. The voxelization processor 12002 may perform an operation and/or process the same or similar to the operation and/or the voxelization process of the quantizer 40001 described with reference to FIG. 4. Details are the same as those described with reference to FIGS. 1 to 9.

The octree occupancy code generator 12003 according to the embodiments performs octree coding on the voxelized positions of the points based on an octree structure. The octree occupancy code generator 12003 may generate an occupancy code. The octree occupancy code generator 12003 may perform an operation and/or method the same as or similar to the operation and/or method of the point cloud encoder (or the octree analyzer 40002) described with reference to FIGS. 4 and 6. Details are the same as those described with reference to FIGS. 1 to 9.

The surface model processor 12004 according to the embodiments may perform trisoup geometry encoding based on a surface model to reconstruct the positions of points in a specific region (or node) on a voxel basis. The surface model processor 12004 may perform an operation and/or method the same as or similar to the operation and/or method of the point cloud encoder (e.g., the surface approximation analyzer 40003) described with reference to FIG. 4. Details are the same as those described with reference to FIGS. 1 to 9.

The intra/inter-coding processor 12005 according to the embodiments may perform intra/inter-coding on point cloud data. The intra/inter-coding processor 12005 may perform coding the same as or similar to the intra/inter-coding described with reference to FIG. 7. Details are the same as those described with reference to FIG. 7. According to embodiments, the intra/inter-coding processor 12005 may be included in the arithmetic coder 12006.

The arithmetic coder 12006 according to the embodiments performs entropy encoding on an octree of the point cloud data and/or an approximated octree. For example, the encoding scheme includes arithmetic encoding. The arithmetic coder 12006 performs an operation and/or method the same as or similar to the operation and/or method of the arithmetic encoder 40004.

The metadata processor 12007 according to the embodiments processes metadata about the point cloud data, for example, a set value, and provides the same to a necessary processing process such as geometry encoding and/or attribute encoding. Also, the metadata processor 12007 according to the embodiments may generate and/or process signaling information related to the geometry encoding and/or the attribute encoding. The signaling information according to the embodiments may be encoded separately from the geometry encoding and/or the attribute encoding. The signaling information according to the embodiments may be interleaved.

The color transform processor 12008, the attribute transform processor 12009, the prediction/lifting/RAHT transform processor 12010, and the arithmetic coder 12011 perform the attribute encoding. The attribute encoding according to the embodiments is the same as or similar to the attribute encoding described with reference to FIGS. 1 to 9, and thus a detailed description thereof is omitted.

The color transform processor 12008 according to the embodiments performs color transform coding to transform color values included in attributes. The color transform processor 12008 may perform color transform coding based on the reconstructed geometry. The reconstructed geometry is the same as described with reference to FIGS. 1 to 9. Also, it performs an operation and/or method the same as or similar to the operation and/or method of the color transformer 40006 described with reference to FIG. 4 is performed. A detailed description thereof is omitted.

The attribute transform processor 12009 according to the embodiments performs attribute transformation to transform the attributes based on the reconstructed geometry and/or the positions on which geometry encoding is not performed. The attribute transform processor 12009 performs an operation and/or method the same as or similar to the operation and/or method of the attribute transformer 40007 described with reference to FIG. 4. A detailed description thereof is omitted. The prediction/lifting/RAHT transform processor 12010 according to the embodiments may code the transformed attributes by any one or a combination of RAHT coding, prediction transform coding, and lifting transform coding. The prediction/lifting/RAHT transform processor 12010 performs at least one of the operations the same as or similar to the operations of the RAHT transformer 40008, the LOD generator 40009, and the lifting transformer 40010 described with reference to FIG. 4. In addition, the prediction transform coding, the lifting transform coding, and the RAHT transform coding are the same as those described with reference to FIGS. 1 to 9, and thus a detailed description thereof is omitted.

The arithmetic coder 12011 according to the embodiments may encode the coded attributes based on the arithmetic coding. The arithmetic coder 12011 performs an operation and/or method the same as or similar to the operation and/or method of the arithmetic encoder 400012.

The transmission processor 12012 according to the embodiments may transmit each bitstream containing encoded geometry and/or encoded attributes and metadata information, or transmit one bitstream configured with the encoded geometry and/or the encoded attributes and the metadata information. When the encoded geometry and/or the encoded attributes and the metadata information according to the embodiments are configured into one bitstream, the bitstream may include one or more sub-bitstreams. The bitstream according to the embodiments may contain signaling information including a sequence parameter set (SPS) for signaling of a sequence level, a geometry parameter set (GPS) for signaling of geometry information coding, an attribute parameter set (APS) for signaling of attribute information coding, and a tile parameter set (TPS) for signaling of a tile level, and slice data. The slice data may include information about one or more slices. One slice according to embodiments may include one geometry bitstream $Geom0^0$ and one or more attribute bitstreams $Attr0^0$ and $Attr1^0$.

A slice refers to a series of syntax elements representing the entirety or part of a coded point cloud frame.

The TPS according to the embodiments may include information about each tile (e.g., coordinate information and height/size information about a bounding box) for one or more tiles. The geometry bitstream may contain a header and a payload. The header of the geometry bitstream according to the embodiments may contain a parameter set identifier (geom_parameter_set_id), a tile identifier (geom_tile_id) and a slice identifier (geom_slice_id) included in the GPS, and information about the data contained in the payload. As described above, the metadata processor 12007 according to the embodiments may generate and/or process the signaling information and transmit the same to the transmission processor 12012. According to embodiments, the elements to perform geometry encoding and the elements to perform attribute encoding may share data/information with each other as indicated by dotted lines. The transmission processor 12012 according to the embodiments may perform an operation and/or transmission method the same as or similar to the operation and/or transmission method of the transmitter 10003. Details are the same as those described with reference to FIGS. 1 and 2, and thus a description thereof is omitted.

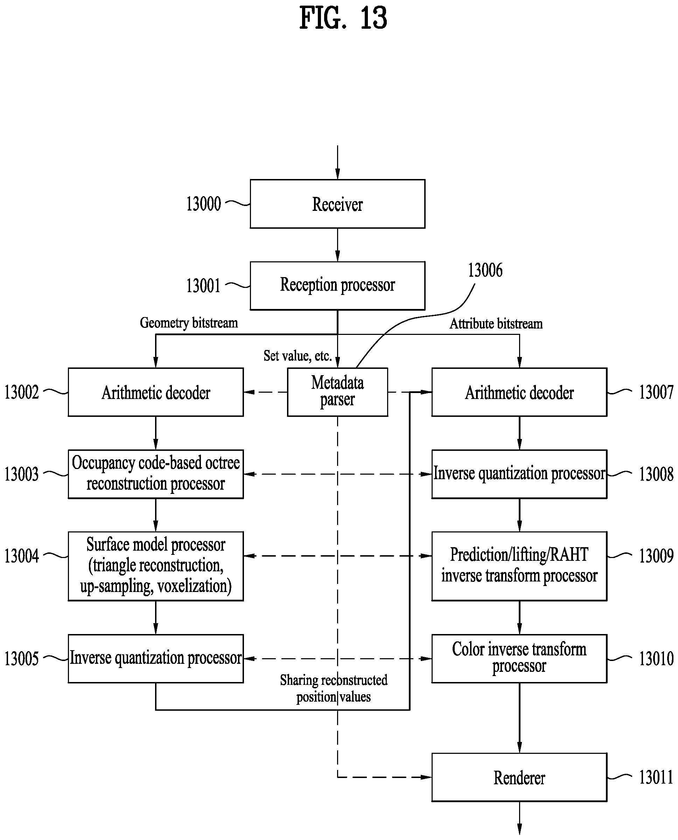

FIG. 13 illustrates a reception device according to embodiments.

The reception device illustrated in FIG. 13 is an example of the reception device 10004 of FIG. 1 (or the point cloud decoder of FIGS. 10 and 11). The reception device illustrated in FIG. 13 may perform one or more of the operations and methods the same as or similar to those of the point cloud decoder described with reference to FIGS. 1 to 11.

The reception device according to the embodiment may include a receiver 13000, a reception processor 13001, an arithmetic decoder 13002, an occupancy code-based octree reconstruction processor 13003, a surface model processor (triangle reconstruction, up-sampling, voxelization) 13004, an inverse quantization processor 13005, a metadata parser 13006, an arithmetic decoder 13007, an inverse quantization processor 13008, a prediction/lifting/RAHT inverse transform processor 13009, a color inverse transform processor 13010, and/or a renderer 13011. Each element for decoding according to the embodiments may perform a reverse process to the operation of a corresponding element for encoding according to the embodiments.

The receiver 13000 according to the embodiments receives point cloud data. The receiver 13000 may perform an operation and/or reception method the same as or similar to the operation and/or reception method of the receiver 10005 of FIG. 1. The detailed description thereof is omitted.

The reception processor 13001 according to the embodiments may acquire a geometry bitstream and/or an attribute bitstream from the received data. The reception processor 13001 may be included in the receiver 13000.

The arithmetic decoder 13002, the occupancy code-based octree reconstruction processor 13003, the surface model processor 13004, and the inverse quantization processor 13005 may perform geometry decoding. The geometry decoding according to embodiments is the same as or similar to the geometry decoding described with reference to FIGS. 1 to 10, and thus a detailed description thereof is omitted.

The arithmetic decoder 13002 according to the embodiments may decode the geometry bitstream based on arithmetic coding. The arithmetic decoder 13002 performs an operation and/or coding the same as or similar to the operation and/or coding of the arithmetic decoder 11000.

The occupancy code-based octree reconstruction processor 13003 according to the embodiments may reconstruct an octree by acquiring an occupancy code from the decoded geometry bitstream (or information about the geometry secured as a result of decoding). The occupancy code-based octree reconstruction processor 13003 performs an operation and/or method the same as or similar to the operation and/or octree generation method of the octree synthesizer 11001. When the trisoup geometry encoding is applied, the surface model processor 13004 according to the embodiments may perform trisoup geometry decoding and related geometry reconstruction (e.g., triangle reconstruction, up-sampling, voxelization) based on the surface model method. The surface model processor 13004 performs an operation the same as or similar to that of the surface approximation synthesizer 11002 and/or the geometry reconstructor 11003.

The inverse quantization processor 13005 according to the embodiments may inversely quantize the decoded geometry.

The metadata parser 13006 according to the embodiments may parse metadata contained in the received point cloud data, for example, a set value. The metadata parser 13006 may pass the metadata to geometry decoding and/or attribute decoding. The metadata is the same as that described with reference to FIG. 12, and thus a detailed description thereof is omitted.

The arithmetic decoder 13007, the inverse quantization processor 13008, the prediction/lifting/RAHT inverse transform processor 13009 and the color inverse transform processor 13010 perform attribute decoding. The attribute decoding is the same as or similar to the attribute decoding described with reference to FIGS. 1 to 10, and thus a detailed description thereof is omitted.

The arithmetic decoder 13007 according to the embodiments may decode the attribute bitstream by arithmetic coding. The arithmetic decoder 13007 may decode the attribute bitstream based on the reconstructed geometry. The arithmetic decoder 13007 performs an operation and/or coding the same as or similar to the operation and/or coding of the arithmetic decoder 11005.

The inverse quantization processor 13008 according to the embodiments may inversely quantize the decoded attribute bitstream. The inverse quantization processor 13008 performs an operation and/or method the same as or similar to the operation and/or inverse quantization method of the inverse quantizer 11006.

The prediction/lifting/RAHT inverse transform processor 13009 according to the embodiments may process the reconstructed geometry and the inversely quantized attributes. The prediction/lifting/RAHT inverse transform processor 13009 performs one or more of operations and/or decoding the same as or similar to the operations and/or decoding of the RAHT transformer 11007, the LOD generator 11008, and/or the inverse lifter 11009. The color inverse transform processor 13010 according to the embodiments performs inverse transform coding to inversely transform color values (or textures) included in the decoded attributes. The color inverse transform processor 13010 performs an operation and/or inverse transform coding the same as or similar to the operation and/or inverse transform coding of the color inverse transformer 11010. The renderer 13011 according to the embodiments may render the point cloud data.

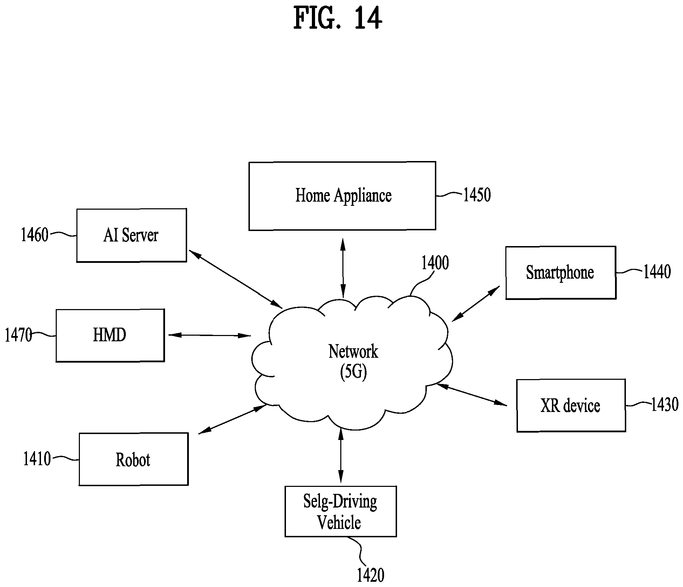

FIG. 14 illustrates an exemplary structure operable in connection with point cloud data transmission/reception methods/devices according to embodiments.

The structure of FIG. 14 represents a configuration in which at least one of a server 1460, a robot 1410, a self-driving vehicle 1420, an XR device 1430, a smartphone 1440, a home appliance 1450, and/or a head-mount display (HMD) 1470 is connected to the cloud network 1400. The robot 1410, the self-driving vehicle 1420, the XR device 1430, the smartphone 1440, or the home appliance 1450 is called a device. Further, the XR device 1430 may correspond to a point cloud data (PCC) device according to embodiments or may be operatively connected to the PCC device.

The cloud network 1400 may represent a network that constitutes part of the cloud computing infrastructure or is present in the cloud computing infrastructure. Here, the cloud network 1400 may be configured using a 3G network, 4G or Long Term Evolution (LTE) network, or a 5G network.

The server 1460 may be connected to at least one of the robot 1410, the self-driving vehicle 1420, the XR device 1430, the smartphone 1440, the home appliance 1450, and/or the HMD 1470 over the cloud network 1400 and may assist in at least a part of the processing of the connected devices 1410 to 1470.

The HMD 1470 represents one of the implementation types of the XR device and/or the PCC device according to the embodiments. The HMD type device according to the embodiments includes a communication unit, a control unit, a memory, an I/O unit, a sensor unit, and a power supply unit.

Hereinafter, various embodiments of the devices 1410 to 1450 to which the above-described technology is applied will be described. The devices 1410 to 1450 illustrated in FIG. 14 may be operatively connected/coupled to a point cloud data transmission device and reception device according to the above-described embodiments.

<PCC+XR>

The XR/PCC device 1430 may employ PCC technology and/or XR (AR+VR) technology, and may be implemented as an HMD, a head-up display (HUD) provided in a vehicle, a television, a mobile phone, a smartphone, a computer, a wearable device, a home appliance, a digital signage, a vehicle, a stationary robot, or a mobile robot.

The XR/PCC device 1430 may analyze 3D point cloud data or image data acquired through various sensors or from an external device and generate position data and attribute data about 3D points. Thereby, the XR/PCC device 1430 may acquire information about the surrounding space or a real object, and render and output an XR object. For example, the XR/PCC device 1430 may match an XR object including auxiliary information about a recognized object with the recognized object and output the matched XR object.

<PCC+XR+Mobile phone>

The XR/PCC device 1430 may be implemented as a mobile phone 1440 by applying PCC technology.

The mobile phone 1440 may decode and display point cloud content based on the PCC technology.

<PCC+Self-driving+XR>

The self-driving vehicle 1420 may be implemented as a mobile robot, a vehicle, an unmanned aerial vehicle, or the like by applying the PCC technology and the XR technology.

The self-driving vehicle 1420 to which the XR/PCC technology is applied may represent a self-driving vehicle provided with means for providing an XR image, or a self-driving vehicle that is a target of control/interaction in the XR image. In particular, the self-driving vehicle 1420 which is a target of control/interaction in the XR image may be distinguished from the XR device 1430 and may be operatively connected thereto.

The self-driving vehicle 1420 having means for providing an XR/PCC image may acquire sensor information from sensors including a camera, and output the generated XR/PCC image based on the acquired sensor information. For example, the self-driving vehicle 1420 may have an HUD and output an XR/PCC image thereto, thereby providing an occupant with an XR/PCC object corresponding to a real object or an object present on the screen.

When the XR/PCC object is output to the HUD, at least a part of the XR/PCC object may be output to overlap the real object to which the occupant's eyes are directed. On the other hand, when the XR/PCC object is output on a display provided inside the self-driving vehicle, at least a part of the XR/PCC object may be output to overlap an object on the screen. For example, the self-driving vehicle 1220 may output XR/PCC objects corresponding to objects such as a road, another vehicle, a traffic light, a traffic sign, a two-wheeled vehicle, a pedestrian, and a building.

The virtual reality (VR) technology, the augmented reality (AR) technology, the mixed reality (MR) technology and/or the point cloud compression (PCC) technology according to the embodiments are applicable to various devices.

In other words, the VR technology is a display technology that provides only CG images of real-world objects, backgrounds, and the like. On the other hand, the AR technology refers to a technology that shows a virtually created CG image on the image of a real object. The MR technology is similar to the AR technology described above in that virtual objects to be shown are mixed and combined with the real world. However, the MR technology differs from the AR technology in that the AR technology makes a clear distinction between a real object and a virtual object created as a CG image and uses virtual objects as complementary objects for real objects, whereas the MR technology treats virtual objects as objects having equivalent characteristics as real objects. More specifically, an example of MR technology applications is a hologram service.

Recently, the VR, AR, and MR technologies are sometimes referred to as extended reality (XR) technology rather than being clearly distinguished from each other. Accordingly, embodiments of the present disclosure are applicable to any of the VR, AR, MR, and XR technologies. The encoding/decoding based on PCC, V-PCC, and G-PCC techniques is applicable to such technologies.

The PCC method/device according to the embodiments may be applied to a vehicle that provides a self-driving service.

A vehicle that provides the self-driving service is connected to a PCC device for wired/wireless communication.

When the point cloud data (PCC) transmission/reception device according to the embodiments is connected to a vehicle for wired/wireless communication, the device may receive/process content data related to an AR/VR/PCC service, which may be provided together with the self-driving service, and transmit the same to the vehicle. In the case where the PCC transmission/reception device is mounted on a vehicle, the PCC transmission/reception device may receive/process content data related to the AR/VR/PCC service according to a user input signal input through a user interface device and provide the same to the user. The vehicle or the user interface device according to the embodiments may receive a user input signal. The user input signal according to the embodiments may include a signal indicating the self-driving service.

As described with reference to FIGS. 1 to 14, point cloud data is composed of a set of points, each of which may have geometry data (geometry information) and attribute data (attribute information). The geometry data is the three-dimensional position of each point (e.g., the coordinate values of the x, y, and z axes). That is, the position of each point is indicated by parameters in a coordinate system representing a three-dimensional space (e.g., the parameters (x, y, z) of the three axes representing the space, the x, y, and z axes). The attribute information may represent color (RGB, YUV, etc.), reflectance, normal vectors, and transparency. The attribute information may be represented in the form of a scalar or vector.

According to embodiments, point cloud data may be classified into category 1 for static point cloud data, category 2 for dynamic point cloud data, and category 3 for point cloud data acquired through dynamic movement, depending on the type and acquisition method of the point cloud data. Category 1 is composed of a point cloud of a single frame with a high density of points for an object or space. Category 3 data may be divided into frame-based data with multiple frames acquired while moving, and fused data of a single frame obtained by matching a point cloud acquired for a large space by a LiDAR sensor with a color image acquired as a 2D image.

According to embodiments, inter-prediction (coding/decoding) may be used to efficiently compress 3D point cloud data with multiple frames over time, such as frame-based point cloud data with multiple frames. Inter-prediction coding/decoding may be applied to geometry information and/or attribute information. Inter-prediction may be referred to as inter-image prediction or inter-frame prediction, and intra-prediction may be referred to as intra-frame prediction.

According to embodiments, the point cloud data transmission/reception device/method is capable of multidirectional prediction between multiple frames. The point cloud data transmission/reception device/method may distinguish between the coding order and the display order of the frames, and may predict the point cloud data according to a predetermined coding order. The point cloud data transmission/reception device/method according to the embodiments may perform inter-prediction in a prediction tree structure based on references between multiple frames.

Further, according to embodiments, the point cloud data transmission/reception device/method may perform inter-prediction by generating a cumulative reference frame. The cumulative reference frame may be an accumulation of a plurality of reference frames.

The point cloud data transmission/reception device/method according to the embodiments may define a prediction unit in order to apply a technique of prediction between multiple frames as a method for increasing the compression efficiency of point cloud data having one or more frames. The prediction unit according to the embodiments may be referred to by various terms, such as a unit, a first unit, a region, a first region, a box, or a zone.

The point cloud data transmission/reception device/method according to the embodiments may compress/reconstruct data composed of a point cloud. Specifically, for effective compression of a point cloud having one or more frames, motion estimation and data prediction may be performed considering the characteristics of the point cloud captured by the LiDAR sensor and the distribution of data contained in the prediction unit.

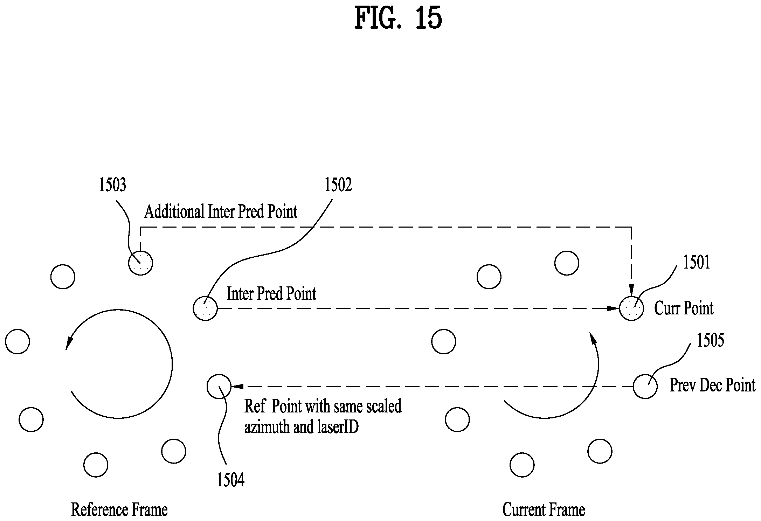

FIG. 15 illustrates inter-frame prediction according to embodiments.

As a method for increasing compression efficiency of point cloud data having one or more frames, the transmission/reception method/device according to the embodiments may extract core position information from the predictive tree geometry to predict each node in order to apply a inter-frame prediction technique.

The transmission/reception method/device according to the embodiments compresses/reconstructs data composed of a point cloud. Specifically, core positions may be extracted or selected to predict inter-frame predictive tree nodes for effective compression of a point cloud having one or more frames.

Referring to FIG. 15, the point cloud data includes a plurality of frames. The plurality of frames may be referred to as a group of frames (GOF). In this case, the frame to be encoded or decoded by the transmission or reception device/method according to embodiments may be referred to as a current frame, and the frame to be referred to for encoding or decoding of the current frame may be referred to as a reference frame.

Referring to FIG. 15, inter- frame prediction (or inter-prediction) in the current predictive tree structure uses one immediately preceding coded frame as a reference frame, and finds in the reference frame a point 1504 whose azimuth is most similar to a previously decoded point 1505 in the current frame, and whose laserID is located at the same position. Then, the closest point 1502 or the next closest point 1503 with the largest azimuth from that point is taken as a predicted value, i.e., a predictor, of the current point 1501. The case of using the closest point 1502 as the predictor and the case of using the second closest point 1503 as the predictor are distinguished by a flag and signaled to determine which point information is to be used as the position of the current point in the case of inter-frame prediction, and then deliver the information about the predictor to the receiver.

The predicted value or predictor according to the embodiments may be referred to as a candidate point or reference point for predicting the current point.

When finding a point to reference in the reference frame to predict the current point in the current frame, it may be found within a predetermined mapping point list. However, the list simply takes the first point coded by azimuth and laserID as each element of the list, and the azimuths are grouped as quantized values by range rather than as actual azimuth values. Therefore, even if the detailed azimuth values are different, they are classified into the same quantized azimuth, which may lead to a large residual value as they are predicted with the same azimuth quantization even if they are significantly different from the previously decoded point in the current frame. Also, by considering only inter-point predictions, a point may be predicted to be a nearby point in a different position or in a position of a different object just because the predicted point is nearby, even though the local motion of the object in the contents is different.

The transmission/reception method/device according to embodiments may apply a clustering technique to configure a mapping point list to efficiently perform inter-frame prediction of predictive geometry. Specifically, clustering may be used to extract the core points of each object within the point cloud contents to generate a mapping point list. The methods for clustering according to embodiments may be adapted for point cloud compression by modifying or deleting specific calculation expressions or functions depending on the purpose.

The mapping point list of core points initially generated within the same group of frames (GoF) may be updated to remove or add points from or to the mapping point list during inter-frame prediction (or inter-prediction) of frames in the GoF as the coding order increases. The scope of application of the prediction method according to the embodiments may be part or the entirety of the LPU, PU (Prediction Unit), or segmented point cloud.

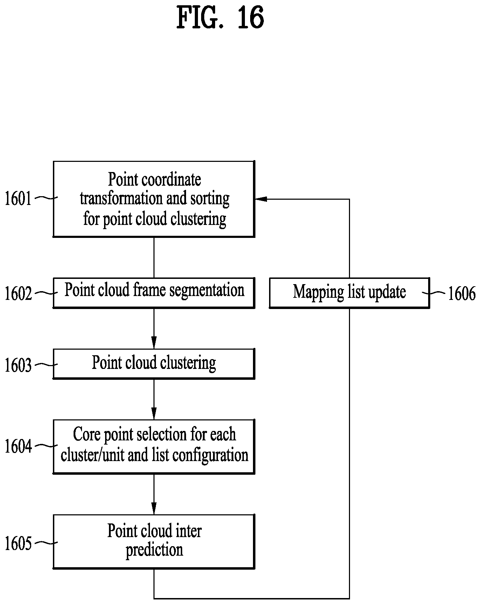

FIG. 16 illustrates an example of a method of transmitting and receiving point cloud data according to embodiments.

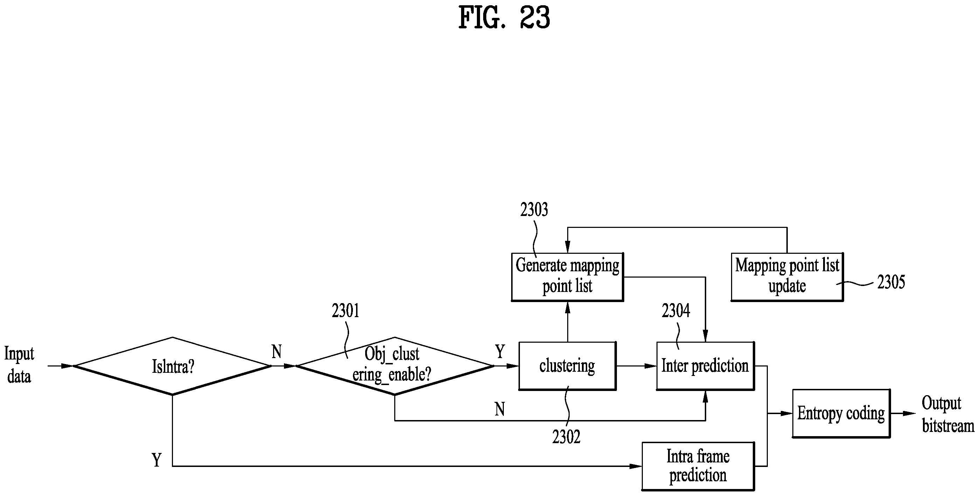

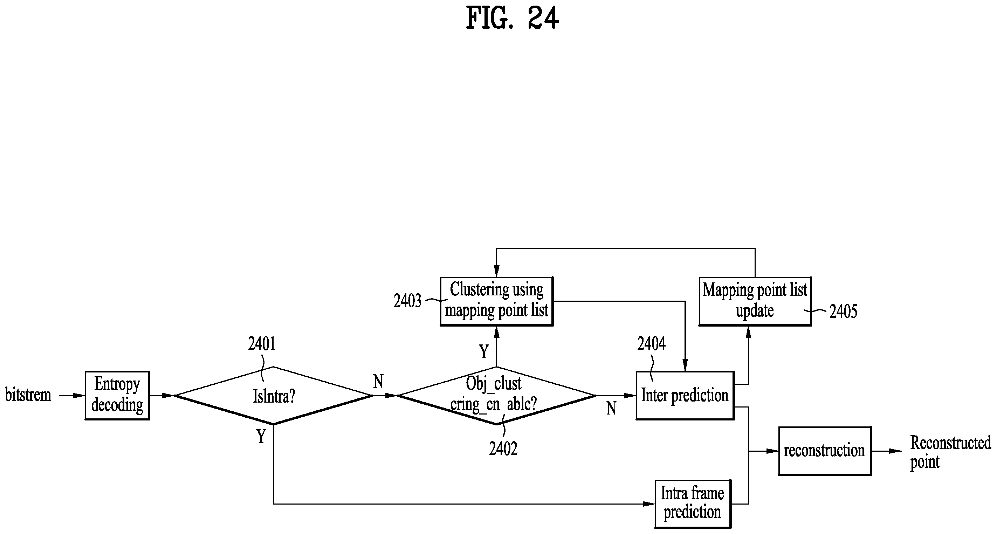

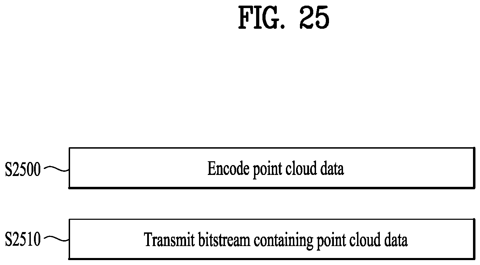

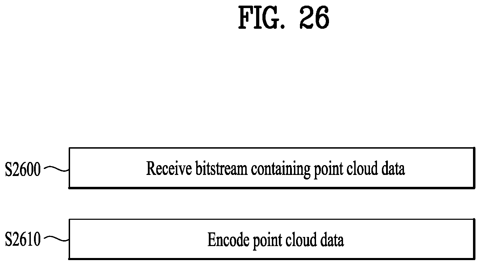

The transmission/reception method of FIG. 16 may correspond to the transmission/reception device of FIG. 1, the transmission/reception of FIG. 2, the point cloud encoder of FIG. 4, the point cloud decoder of FIGS. 10 and 11, the transmission device of FIG. 12, the reception device of FIG. 13, the devices of FIG. 14, the transmission device/method of FIG. 23, the reception device/method of FIG. 24, the transmission method of FIG. 25, or the reception method of FIG. 26, or a combination thereof.

Referring to FIG. 16, the transmission/reception method according to the embodiments may include transforming and sorting coordinates of point cloud data (1601), segmenting frames of the point cloud data (1602), clustering the point cloud data (1603), selecting core points for each cluster/unit and generating a list (1604), inter-predicting the point cloud data (1605), and/or updating the list (1606). In the transmission/reception method according to the embodiments, any of the operations may be omitted, and the order of the operations may be changed.

The transmission/reception method according to the embodiments may transform the point coordinates as needed for the purpose of configuring the mapping point list for point cloud inter prediction. If a Cartesian coordinate system is used, the coordinate transformation may be skipped, and the point cloud may be sorted by system-defined criteria as needed. If coordinate transformation is performed (into, for example, spherical coordinates), the point cloud data may be sorted by system or user-defined criteria after the transformation. After the transformation and sorting are completed, the point cloud may be segmented into PU/LPU/Road and Object/Background and Object according to a predetermined method and size (1602). Then, point cloud clusters may be searched for using a clustering method (1603) defined by the user or the system, and a core point may be selected for each cluster and a core point list (or mapping point list) may be generated

(1604). The list may be delivered for use in point cloud inter prediction (1605). After the prediction is completed for the current frame, the mapping point list is updated based on the current frame (1606). Points that are not included in the mapping point list may be separated and clustered for use as a reference frame for the next frame, and the mapping point list may be updated and used for prediction of the next frame.

To configure the mapping point list according to the embodiments, any of the following clustering methods may be applied.

For example, the clustering method according to the embodiments may use an expectation-maximization (EM) algorithm using a Gaussian mixture model (GMM), which extracts points based on point distribution information.

Alternatively, the clustering method according to the embodiments may use the Hierarchical Density Based Spatial Clustering of Applications with Noise (HDBScan), which extracts points based on point distance and density information.

(1) Configuring a mapping list using the EM algorithm using the GMM

The EM algorithm using the GMM according to the embodiments may be divided into E-step (Expectation-step) and M-step (Maximization-step), and the E-step and M-step may be repeatedly performed to find the maximum likelihood of each group (or cluster) of the GMM.

A. E-step

i. The number of clusters (point groups) is input by the user or predefined on the system.
ii. The population mean and population variance of each cluster are initialized to random values.
iii. The probability that each input point belongs to each cluster is calculated, and the label of the cluster with the highest probability is assigned.

B. M-step

i. The population mean and population variance of each cluster are calculated based on the points classified as the label of the cluster in the E-step, and the population mean and population variance of the cluster are updated.

C. The E-step and M-step are repeated as many times as the input number, or until the degree of change in the calculated population variance and population mean is constant.

Once the clusters (or point groups or objects) have been found with (1) the EM algorithm using the GMM described above, the mean and variance representative of each cluster may be calculated. The point closest to the mean may be searched for as a mapping point (or core point) for each cluster, and a mapping list (or core point list) may be configured. When there is more than one closest point, the one that is farther from or closer to the origin may be selected by a system predetermined method. In the case of spherical coordinates, azimuth has a greater or lesser value, radius has a greater or lesser value, elevation has a greater or lesser value, elevation has a greater or lesser value, or both elevation and azimuth have a greater or lesser value, a point may be selected considering both radius and elevation, considering both radius and azimuth, or considering all three parameters radius, elevation, and azimuth.

The transmission/reception method/device according to the embodiments may select a core point in the cluster based on at least one of the parameters radius, azimuth, and elevation. The core point may be a point that is closest to the mean of the points included in the cluster.

When extracting features of a cluster using the EM algorithm using GMM according to the embodiments, features/modules/functions that are not required in the process of finding a core point for inter prediction of the predictive geometry may be omitted.

(2) Configuring a mapping list using the HDBScan method

The HDBScan method according to the embodiments is a method of grouping points into meaningful clusters by combining clusters with high similarity or close distance in consideration of the density of the data. The points are instrumentally clustered starting with a cluster that has the minimum number of points that a cluster can have under given conditions, and a similarity matrix is calculated for the distances between all points, and adjacent points form a cluster, and the similarity matrix is iteratively updated to form a cluster of points that are close together. Points that do not meet the conditions for being a cluster or are not included in any cluster may be classified as noise (or outliers) and managed separately. A cluster may be managed by a single index, and a parent point representative of the cluster may be extracted. The information about the points detected as parent points within a single cluster may be separately collected into a mapping list, and may be used as core point information for inter prediction of predictive geometry. The HDBScan method according to the embodiments may be used for point cloud compression while omitting features/modules/functions that are not used for the purpose of finding core points for inter prediction of the predictive geometry.

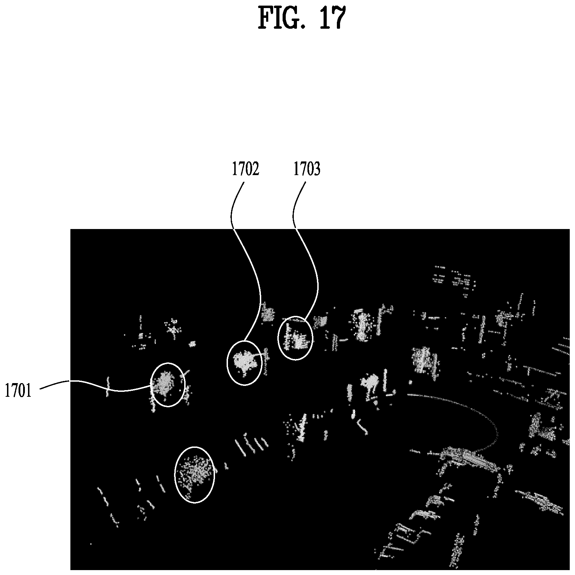

FIG. 17 illustrates clustering of point cloud data according to embodiments.

FIG. 17 shows some of the results of applying the clustering techniques to the point cloud content to separate objects. One cluster may be represented by the same color, and points may be grouped together into a cluster based on the distance and density of the points. In the cluster, the mapping point may be a point located in the center of each cluster, and may be added to the mapping list along with information about the cluster (size of the cluster, index by which the cluster may be classified, center point, etc.).

The two proposed clustering methods according to the embodiments may be utilized for extracting core points, and any of the method of extracting core points based on the density or the method of extracting core points based on the distribution may be applied.

Referring to FIG. 17, clusters 1701, 1702, 1703, etc. of point cloud data according to embodiments are shown. The point cloud data may be grouped into clusters by any of the clustering methods described above. The algorithm used for clustering may cluster the points based on the density or distribution of the points. The cluster may be referred to as a population or group. The clustering according to the embodiments may be referred to as grouping.

While two methods of clustering are presented herein according to embodiments, various algorithms based on the density or distribution of the point cloud data may be applied.

Generating a mapping list according to embodiments

Either density based clustering or distribution based clustering may be determined as the clustering method according to the embodiments, and may be applied to the entirety or a portion of the point cloud data. For example, a mapping list may be generated by performing clustering on all the point cloud data configured as a single frame. The frame may be divided into LPUs/PUs, and clustering may be performed on each LPU/PU. Then, the mapping lists may be integrated into one, or the mapping lists may be managed separately for each LPU/PU. If the mapping lists are organized in the form of segments of point cloud data and configured into a single list, the LPUs/PUs may be divided in an overlapping manner. If the positions of the core points overlap, the index of the mapping list belonging to the PU that has already been coded is maintained. The segmentation of the point cloud frame may be in the form of a cube or a cuboid. The mapping list may be configured by separating the road and object or the background and object, and then extracting the core points only for the object.

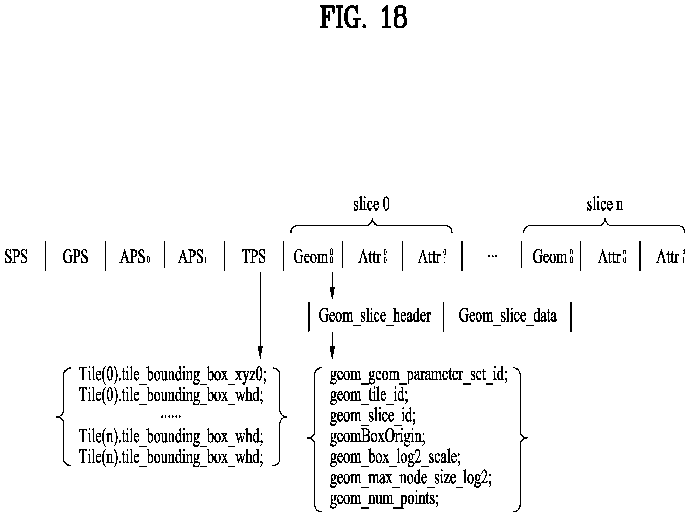

FIG. 18 illustrates an example of an encoded bitstream according to embodiments. FIG. 18 may illustrate a configuration of an encoded point cloud.

Bitstreams according to embodiments may be transmitted based on the transmission device 10000 of FIG. 1, the transmission method of FIG. 2, the encoder of FIG. 4, the transmission device of FIG. 12, the devices of FIG. 14, the transmission method of FIG. 16, the transmission method of FIG. 25, or the transmission method/device of FIG. 24. Further, bitstreams according to embodiments may be received based on the reception device 20000 of FIG. 1, the reception method of FIG. 2, the decoder of FIG. 11, the reception device of FIG. 13, the devices of FIG. 14, the reception method of FIG. 16, the reception method of FIG. 26, and/or the reception method/device of FIG. 24.

The transmission/reception device/method according to the embodiments may signal clustering-based inter-prediction related information. Hereinafter, parameters (which may be referred to as metadata, signaling information, etc.) according to embodiments may be generated in a process of a transmitter according to embodiments described below, and delivered to a receiver according to embodiments for use in a reconstruction process of point cloud data. For example, the parameters according to the embodiments may be generated in a metadata processor (or metadata generator) of the transmission device according to the embodiments described below and acquired by a metadata parser of the reception device according to the embodiments described below.

The elements of the mapping list using the clustering method according to embodiments may be defined. The sequence parameter set according to embodiments may signal that the mapping list is configured on an object-by-object basis for inter prediction, the GPS may carry initial parameters for separating objects, and the geometry slice unit may signal details of the objects found by clustering.

While the information is described in terms of its use in geometry, the information may be shared for attribute coding, and the position of the generated signaling may be added to a higher/lower level syntax structure, depending on the purpose.

The abbreviations shown in FIG. 18 means the following.

SPS: Sequence Parameter Set
GPS: Geometry Parameter Set
APS: Attribute Parameter Set
TPS: Tile Parameter Set
Geom: Geometry bitstream = geometry slice header + geometry slice data
Attr: Attribute bitstream = attribute slice header + attribute slice data

A slice according to embodiments may be referred to as a data unit. The slice header may be referred to as a data unit header. In addition, slices may be referred to by other terms with similar meanings such as bricks, boxes, and regions.

The bitstream according to embodiments may provide tiles or slices to allow the point cloud to be divided into regions for processing. When the point cloud is divided into regions, each region may have a different importance. The transmission and reception devices according to embodiments may provide different filters or different filter units to be applied based on the importance, thereby providing a method to use a more complex filtering method with higher quality results for important regions. In addition, by allowing different filtering to be applied to each region (region divided into tiles or slices) depending on the processing capacity of the reception device, instead of using a complicated filtering method for the entire point cloud, better image quality may be ensured for regions that are important to the user and appropriate latency may be ensured for the system. When the point cloud is divided into tiles, different filters or different filter units may be applied to the respective tiles. When the point cloud is divided into slices, different filters or different filter units may be applied to the respective slices.

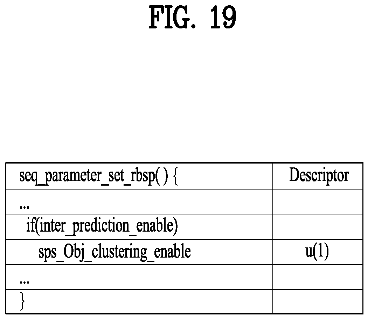

FIG. 19 shows an example syntax of a sequence parameter set (seq_parameter_set) according to embodiments.

The SPS may further include clustering-related syntax information for configuring a mapping list. This syntax information may be signaled.

sps_Obj_clustering_enable signals whether the core point (or mapping point) is searched for using the object clustering method when inter prediction is applied to the sequence. When sps_Obj_clustering_enable is TRUE, it may indicate that the core point is searched for using the clustering method according to an embodiment. When it is FALSE, it may indicate that the core point is searched for using a method other than the clustering method.

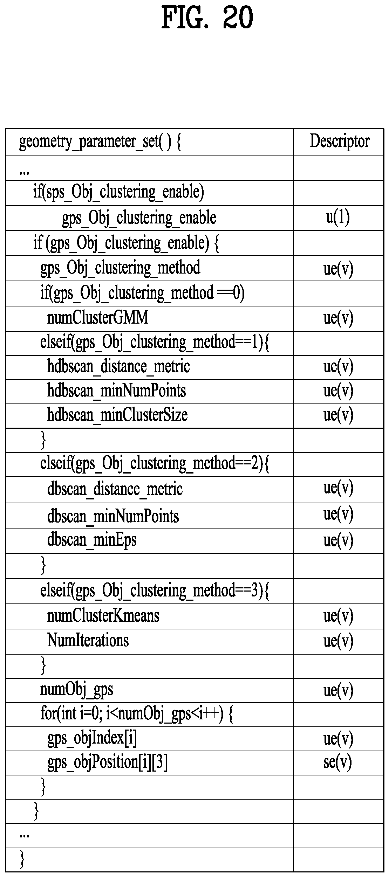

FIG. 20 shows an example syntax of a geometry parameter set (geometry_parameter_set) according to embodiments.

The GPS may further include clustering-related syntax information for configuring a mapping list. This syntax information may be signaled.

When sps_Obj_clustering_enable is TRUE, gps_Obj_clustering_enable signals that a clustering method has been applied for the selection of mapping points during geometry coding on a frame-by-frame basis. In the case where the sps_Obj_clustering_enable information is omitted at the SPS level, gps_Obj_clustering_enable is independently operable and may be applied regardless of the geometry coding method when the selection of core points is needed. When gps_Obj_clustering_enable is TRUE, it may indicate that the core points are searched for using the clustering method. When it is FALSE, it may indicate that the core points are searched for using a method other than the clustering. That is, it may indicate whether clustering is performed.

When gps_Obj_clustering_enable is TRUE, gps_Obj_clustering_method may signal the clustering method applied in searching for core points. The clustering method according to the embodiments may be one of the following types of mode information. Among the value of gps_Obj_clustering_method, 0 may indicate that clustering using the GMM is used, 1 may indicate that clustering using the HDBScan method is used, 2 may indicate that the DBScan method is used, and 3 may indicate that the k-means method is used. If other clustering methods are added, corresponding mode information may be added.

mode description

```
0000 Gaussian Mixture Model based
0001 Hierarchical Density based
0010 Density based Spatial clustering based
0011 K-means based
0100 - 1111 reserved
```

When gps_Obj_clustering_method is 0, NumClusterGMM may indicate the total number of clusters to classify into an object.

When gps_Obj_clustering_method is equal to 1, hdbscan_distance_metric may indicate the distance calculation method used to classify a cluster as an object. It may indicate the distance calculation method according to the clustering method.

mode description

```
0000 Euclidean
0001 Manhattan
0010 Radius only
0011 Azimuth only
0100 Elevation only
0101 Radius+azimuth
0110 Radius+elevation
0111 Azimuth+elevation
1000 Spherical coordinates difference
1001- 1111 reserved
```

Regarding the values of Mode, 0 and 1, which are for Cartesian coordinates, 0 indicates that the Euclidean distance is calculated and 1 indicates that the Manhattan distance is calculated. Regarding the values of Mode from 2 to 7, which are for spherical coordinates calculated with respect to the origin, 2 indicates that the difference in radius is considered, 3 indicates that the difference in azimuth is considered, and 4 indicates that the difference in elevation or laser ID is considered. The Mode value, 5, indicates that the differences in radius and azimuth are considered in calculating the distance, 6 indicates that the differences in radius and elevation are considered in calculating the distance, and 7 indicates that the differences in radius, elevation, and azimuth are all considered in calculating the distance. Modes may include various calculation methods for calculating the distance between two points.

hdbscan_minNumPoints may indicate the maximum number of points to consider as neighbors when gps_Obj_clustering_method is equal to 1.

hdbscan_minClusterSize may indicate the number of points contained within a single cluster that may be considered as an independent cluster when gps_Obj_clustering_method is equal to 1.

dbscan_distance_metric may indicate the distance calculation method used to classify points as objects when gps_Obj_clustering_method is equal to 2. The distance calculation method may include the modes below. It may represent the distance calculation method based on the clustering method.

mode description

```
0000 Euclidean
0001 Manhattan
0010 Radius only
0011 Azimuth only
0100 Elevation only
0101 Radius+azimuth
0110 Radius+elevation
0111 Azimuth+elevation
1000 Spherical coordinates difference
1001- 1111 reserved
```

Regarding the values of Mode, 0 and 1, which are for Cartesian coordinates, 0 indicates that the Euclidean distance is calculated and 1 indicates that the Manhattan distance is calculated. Regarding the values of Mode from 2 to 7, which are for spherical coordinates calculated with respect to the origin, 2 indicates that the difference in radius is considered, 3 indicates that the difference in azimuth is considered, and 4 indicates that the difference in elevation or laser ID is considered. The Mode value, 5, indicates that the differences in radius and azimuth are considered in calculating the distance, 6 indicates that the differences in radius and elevation are considered in calculating the distance, and 7 indicates that the differences in radius, elevation, and azimuth are all considered in calculating the distance. Modes may include various calculation methods for calculating the distance between two points.

dbscan_minNumPoints may indicate the maximum number of points to consider as neighbors when gps_Obj_clustering_method is equal to 2.

dbscan_minEps is the radius information for defining a circle to classify points as core data, border data, and noise data in grouping points when gps_Obj_clustering_method is equal to 2. It may be used as a reference value for finding core data and border data by extracting core data and border data as one cluster while classifying core data, border data, and noise data based on the radius dbscan_minEps of a circle centered on each point.

numClusterKmeans may indicate the total number of clusters to classify into an object when gps_Obj_clustering_method is equal to 3.

NumIterations may indicate the total number of iterations of the k-means algorithm for finding clusters when gps_Obj_clustering_method is equal to 3.

NumObj_gps may indicate the total number of objects extracted based on the information in gps_Obj_clustering_method.

gps_objIntex[i] may indicate an index for identifying as many objects as numObj_gps.

gps_objPosition[i][3] may indicate the position of the core point of the object. The coordinates of the core point may be Cartesian coordinates, spherical coordinates, or the like, and may be input according to the coordinate system information about the point cloud data. In the embodiment, it is expressed as 3D coordinate information. However, it may be replaced with 2D information when necessary. In this case, the syntax may be gps_objPosition[i][2]. Further, the information may be managed separately as a structure.

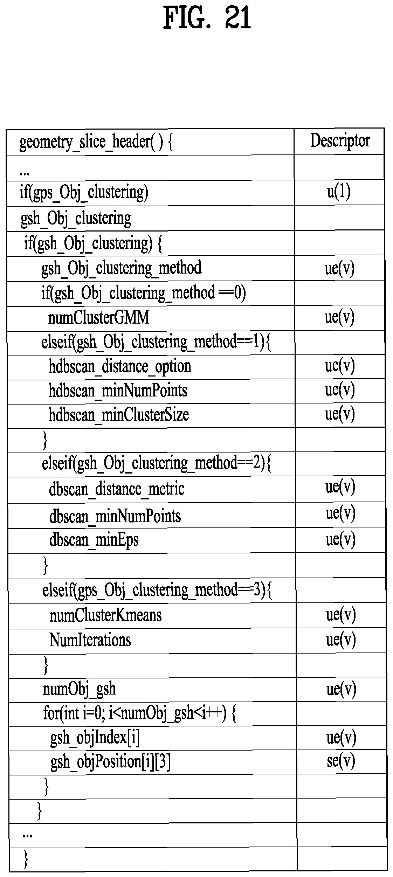

FIG. 21 shows an example syntax of a geometry slice header (geometry_slice_header) according to embodiments.

The geometry slice header may further include clustering-related syntax information for configuring a mapping list. This syntax information may be signaled.

When gps_Obj_clustering_enable is TRUE, gsh_Obj_clustering_enable may indicate whether a clustering method has been applied for mapping point search during geometry coding on a slice-by-slice basis. In the case where the gps_Obj_clustering_enable information is omitted at the GPS level, gsh_Obj_clustering_enable is independently operable and may be applied regardless of the geometry coding method when the selection of core points is needed. When gsh_Obj_clustering_enable is TRUE, it may indicate that the core points are selected using the clustering method. When it is FALSE, it may indicate that the core points are selected using a method other than the clustering. That is, it may indicate whether clustering is performed.

When gsh_Obj_clustering_enable is TRUE, gsh_Obj_clustering_method may indicate the clustering method applied in selecting core points. The clustering method may be one of the following types of mode information. Among the values of Obj_clustering_method, 0 may indicate that clustering using the GMM is used, 1 may indicate that clustering using the HDBScan method is used, 2 may indicate that the DBScan method is used, and 3 may indicate that the k-means method is used. If other clustering methods are added, corresponding mode information may be added.

mode description

```
0000 Gaussian Mixture Model based
0001 Hierarchical Density based
0010 Density based Spatial clustering based
0011 K-means based
0100 - 1111 reserved
```

When gsh_Obj_clustering_method is 0, numClusterGMM may indicate the total number of clusters to classify into an object.

When gps_Obj_clustering_method is equal to 1, hdbscan_distance_metric may indicate the distance calculation method used to classify a cluster as an object. It may indicate the distance calculation method according to the clustering method.

mode description

```
0000 Euclidean
0001 Manhattan
0010 Radius only
0011 Azimuth only
0100 Elevation only
0101 Radius+azimuth
0110 Radius+elevation
0111 Azimuth+elevation
1000 Spherical coordinates difference
1001- 1111 reserved
```

Regarding the values of Mode, 0 and 1, which are for Cartesian coordinates, 0 indicates that the Euclidean distance is calculated and 1 indicates that the Manhattan distance is calculated. Regarding the values of Mode from 2 to 7, which are for spherical coordinates calculated with respect to the origin, 2 indicates that the difference in radius is considered, 3 indicates that the difference in azimuth is considered, and 4 indicates that the difference in elevation or laser ID is considered. The Mode value, 5, indicates that the differences in radius and azimuth are considered in calculating the distance, 6 indicates that the differences in radius and elevation are considered in calculating the distance, and 7 indicates that the differences in radius, elevation, and azimuth are all considered in calculating the distance. Modes may include various calculation methods for calculating the distance between two points.

hdbscan_minNumPoints may indicate the maximum number of points to consider as neighbors when gps_Obj_clustering_method is equal to 1.

hdbscan_minClusterSize may indicate the number of points contained within a single cluster that may be considered as an independent cluster when gps_Obj_clustering_method is equal to 1.

dbscan_distance_metric may indicate the distance calculation method used to classify points as objects when gps_Obj_clustering_method is equal to 2. The distance calculation method may include the modes below. It may represent the distance calculation method based on the clustering method.

mode description

```
0000 Euclidean
0001 Manhattan
0010 Radius only
0011 Azimuth only
0100 Elevation only
0101 Radius+azimuth
0110 Radius+elevation
0111 Azimuth+elevation
1000 Spherical coordinates difference
1001- 1111 reserved
```

Regarding the values of Mode, 0 and 1, which are for Cartesian coordinates, 0 indicates that the Euclidean distance is calculated and 1 indicates that the Manhattan distance is calculated. Regarding the values of Mode from 2 to 7, which are for spherical coordinates calculated with respect to the origin, 2 indicates that the difference in radius is considered, 3 indicates that the difference in azimuth is considered, and 4 indicates that the difference in elevation or laser ID is considered. The Mode value, 5, indicates that the differences in radius and azimuth are considered in calculating the distance, 6 indicates that the differences in radius and elevation are considered in calculating the distance, and 7 indicates that the differences in radius, elevation, and azimuth are all considered in calculating the distance. Modes may include various calculation methods for calculating the distance between two points.

dbscan_minNumPoints may indicate the maximum number of points to consider as neighbors when gps_Obj_clustering_method is equal to 2.

dbscan_minEps is the radius information for defining a circle to classify points as core data, border data, and noise data in grouping points when gps_Obj_clustering_method is equal to 2. It may be used as a reference value for finding core data and border data by extracting core data and border data as one cluster while classifying core data, border data, and noise data based on the radius dbscan_minEps of a circle centered on each point.

numClusterKmeans may indicate the total number of clusters to classify into an object when gps_Obj_clustering_method is equal to 3.

NumIterations may indicate the total number of iterations of the k-means algorithm for finding clusters when gps_Obj_clustering_method is equal to 3.

NumObj_gps may indicate the total number of objects extracted based on the information in gps_Obj_clustering_method.

gps_objIntex[i] may indicate an index for identifying as many objects as numObj_gps.

gps_objPosition[i][3] may indicate the position of the core point of the object. The coordinates of the core point may be Cartesian coordinates, spherical coordinates, or the like, and may be input according to the coordinate system information about the point cloud data. In the embodiment, it is expressed as 3D coordinate information. However, it may be replaced with 2D information when necessary. In this case, the syntax may be gps_objPosition[i][2]. Further, the information may be managed separately as a structure.

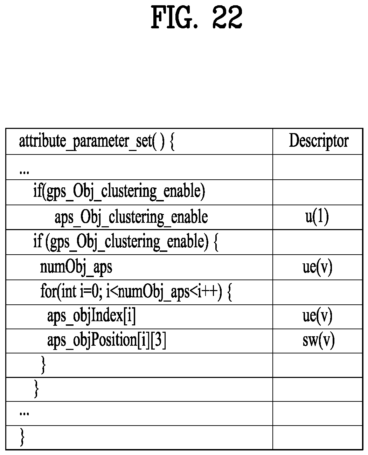

FIG. 22 shows an example syntax of an attribute parameter set (attribute_parameter_set) according to embodiments.

The APS may further include clustering-related syntax information for configuring a mapping list. This syntax information may be signaled.

aps_Obj_clustering_enable: When gps_Obj_clustering_enable is TRUE, it may signal whether a clustering method is applied to select mapping points when coding geometry, and sigal whether the information is inherited when coding attributes. When set to TRUE, aps_Obj_clustering_enable indicates that attribute coding is performed by inheriting the results of selecting core points using the clustering method, and when set to FALSE, it indicates that attribute coding is performed using the conventional method.

numObj_aps may inherit the total number of clusters extracted when coding geometry.

aps_objIndex[i]: Each object may have as many different indices as numObj_aps. aps_objIndex[i] may indicate an identifier that identifies the object.

aps_objPosition[i][3]: May indicate the position of the core point of the object. The coordinates of the core point may be Cartesian coordinates, spherical coordinates, or the like, and may be input according to the coordinate information about the point cloud data. While expressed as 3D coordinate information in the embodiment, it may be replaced with 2D information as needed. In this case, the syntax may be aps_objPosition[i] [2]. This information may be inherited directly from GPS. The information may also be managed separately as a structure.

FIG. 23 illustrates an example of a transmission method/device according to embodiments.

The transmission method/device of FIG. 23 may be executed by the transmission device of FIG. 1, the transmission of FIG. 2, the point cloud encoder of FIG. 4, the transmission device of FIG. 12, the devices of FIG. 14, the method of FIG. 16, and/or the transmission method/device described with reference to FIG. 25, or may correspond to or be combined with the embodiments described in each figure.

FIG. 23 may illustrate a structure of a point cloud encoder according to embodiments. The point cloud encoder described in the general context of processing of point cloud compression may be represented as shown in FIG. 23.

The transmission device according to the embodiments receives point cloud data as input data, separates the data into geometry and attribute values of the points, and converts the coordinates into a form that can be coded. When a frame is for intra prediction (or in- frame prediction), the conventional intra prediction method is applied and a bitstream is generated after entropy coding. When it is not for intra prediction, it is checked whether the object clustering method is applied (2301). If the object clustering is applied, the clustering method pre-entered in the system is applied (2302), a mapping point list is generated (2303), and inter prediction is performed with the generated mapping point list

(2304). If the mapping point list is not generated by the object clustering method, the bitstream can be generated by applying the conventional inter prediction method followed by entropy coding. When the next frame is an inter prediction frame, the mapping point list may be updated to add only the remaining points to the point list and utilized for inter prediction again, and entropy coding may be performed only for the added points.

Referring to FIG. 23, the transmission method/device according to the embodiments may receive point cloud data as input data, determine whether to perform intra prediction on the point cloud data of the corresponding frame, and perform intra frame prediction accordingly. If intra frame prediction is not performed, the transmission method/device according to the embodiments may determine whether to perform the object clustering according to the embodiments (2301). Then, in response, the object clustering may be performed (2302) or intra prediction may be performed immediately (2304). In the case where the object clustering is performed (2302), a mapping point list according to an embodiment is generated (2303) after the clustering (2302). The generation (2303) of the mapping point list may conform to what is described above with reference to FIGS. 16 and 17. Once the mapping point list is generated (2303), the inter prediction (2304) may be performed based on the generated mapping point list (2303), and entropy coding may be performed to output a bitstream. The mapping point list 2303 may be updated (2305) and used for inter-prediction during encoding of the next frame.

FIG. 24 illustrates an example of a reception method/device according to embodiments.

The reception method/device of FIG. 24 may be executed by the reception device of FIG. 1, the reception of FIG. 2, the point cloud decoder of FIGS. 10, 11, the reception device of FIG. 13, the devices of FIG. 14, the method of FIG. 16, and/or the reception method/device described with reference to FIG. 26, or may correspond to or be combined with the embodiments described in each figure.

FIG. 24 may illustrate a structure of a point cloud decoder according to embodiments. The point cloud encoder described in the general context of processing of point cloud compression may be represented as shown in FIG. 24.

After entropy decoding, dequantization, and inverse transformation of the geometry and attribute bitstreams from the transmission method/device according to the embodiments, the reception method/device according to the embodiments checks whether the frame is an intra prediction frame on a slice/frame basis (2401). If the frame is an intra prediction frame, the point cloud data is reconstructed using the existing intra frame prediction. If it is not an intra prediction frame, it is checked whether a mapping point list has been generated through object clustering (2402). If the mapping point list has been generated, the points in the mapping point list may be primarily classified, clustered (2403), and then subjected to inter prediction (2404). After the inter prediction, the points may be reconstructed and utilized for attribute coding and rendering. The points at positions corresponding to the mapping points found through the inter prediction may be updated and utilized as a mapping point list for the next frame prediction.

Referring to FIG. 24, the reception method/device according to the embodiments receives a bitstream containing point cloud data as input and performs entropy decoding. Then, it may determine whether to perform intra prediction on the point cloud data of the frame (2401), and may perform the intra frame prediction accordingly. If the intra frame prediction is not performed, the reception method/device according to the embodiments may determine whether to perform the object clustering according to the embodiments (2402). Then, in response, the object clustering may be performed using the mapping point list (2403), or perform inter prediction immediately (2404). The reception method/device according to the embodiments may perform the inter-prediction 2404 after the object clustering (2403) and reconstruct the point cloud data. After the inter-prediction (2404), the mapping point list may be updated (2405), and the updated mapping point list may be used for clustering for the next frame.

Generation of the mapping point list 2303 may conform to the description above with reference to FIGS. 16 and 17. Once the mapping point list 2303 is generated, the inter prediction 2304 may be performed based on the generated mapping point list 2303, and entropy coding may be performed to output a bitstream. The mapping point list 2303 may be updated (2305) and used for inter prediction during encoding of the next frame.

FIG. 25 illustrates an example of a transmission method according to embodiments.

The transmission method of FIG. 25 may be performed by the transmission device of FIG. 1, the transmission of FIG. 2, the point cloud encoder of FIG. 4, the transmission device of FIG. 12, the devices of FIG. 14, the method of FIG. 16, and/or the transmission method/device described with reference to FIG. 23, or may correspond to or be combined with the embodiments described in each figure.

The transmission method of FIG. 25 includes encoding point cloud data (S2500), and transmitting a bitstream containing the point cloud data (S2510).

The encoding of the point cloud data (S2500) includes clustering the point cloud data. The clustering according to embodiments is illustrated at 1603 in FIG. 16. The clustering according to embodiments may be performed using an EM algorithm using GMM, which is based on distribution information about the points, or using HDBScan, which is based on distance and density information about the points. The encoding may further include segmenting a frame. The frame may be segmented based on units such as LPUs/PUs (prediction units), and clustering may be performed on each segmented unit. There may be various criteria for segmenting the frame, such as units of a specific size, objects and backgrounds, etc.

Further, the encoding of the point cloud data (S2500) includes selecting a first point related to a cluster generated in the clustering operation. The first point may be referred to as a core point or a mapping point according to embodiments. The first point may be selected as a point that is closest to the mean of the cluster. In the case where there are two or more closest points, the first point may be selected based on a predetermined criterion. The selection of the core point has been described above with reference to FIG. 16.

The transmission method according to the embodiments generates a list based on the selected first point. Thus, the list may include information about the core points selected in each cluster. The list corresponds to the mapping point list or core point list described with reference to FIGS. 16 and 17.

The encoding step according to the embodiments further includes predicting points between multiple frames based on the generated list (1605 in FIG. 16), i.e., performing inter-prediction. The transmission method according to the embodiments may perform the inter-prediction using a list consisting of core points generated through clustering. Thus, the inter-prediction may ensure that point information is referenced between the same objects, and may mitigate the issue of increasing a residual due to some points being referenced in the prediction simply because they are close in distance.

The encoding according to the embodiments may further include updating the list. The list may be updated and used for prediction of point cloud data belonging to the next frame. The operation of updating the list may be performed iteratively. The list initially generated within a group of frames may be updated in the frame encoding operation.

In the transmitting of the bitstream including the point cloud data (S2510), the bitstream may include information indicating whether the clustering is performed. This information represents Obj_clustering_enable in FIG. 19. Further, the bitstream may include information indicating a method to perform the clustering. The information indicating the method to perform the clustering represents the Obj_clustering_method information in FIGS. 20 and 21. The bitstream according to the embodiments may include information about the parameters described in FIGS. 19 to 22, based on which clustering and inter-prediction of the point cloud data may be performed.

The transmission method according to the embodiments may be performed by a transmission device according to the embodiments. The transmission device according to the embodiments includes an encoder configured to encode point cloud data and a transmitter configured to transmit a bitstream containing the point cloud data.

The encoder and transmitter according to the embodiments may correspond to or be combined with the transmission device of FIG. 1, the transmitter of FIG. 2, the point cloud encoder of FIG. 4, the transmission device of FIG. 12, the devices of FIG. 14, the method of FIG. 16, and/or the transmission device described with reference to FIG. 23. The transmission device according to the embodiments may be represented by a device that includes as a component a unit, module, or processor configured to perform the processing operations of the transmission method described above.

The encoder and transmitter according to the embodiments may include a processor and a memory as components to perform the transmission method described above. The memory may store instructions that cause the processor to perform operations.

FIG. 26 illustrates an example of a reception method according to embodiments.

The reception method/device of FIG. 26 may be executed by the reception device of FIG. 1, the reception of FIG. 2, the point cloud decoder of FIGS. 10, 11, the reception device of FIG. 13, the devices of FIG. 14, the method of FIG. 16, and/or the reception method/device described with reference to FIG. 24, or may correspond to or be combined with the embodiments described in each figure.

Referring to FIG. 26, the reception method according to the embodiments includes receiving a bitstream containing point cloud data (S2600) and decoding the point cloud data (S2610). The reception method according to the embodiments may correspond to a reverse process to the transmission method according to FIG. 25.

The decoding of the point cloud data includes clustering the point cloud data. The clustering according to the embodiments has been described above with reference to FIGS. 16 and 17. The clustering may be performed based on a list. The list includes information about points, wherein the information about the points included in the list represents core points selected in each cluster. In other words, the information about the points included in the list may represent information about the points closest to the mean of the points belonging to each cluster. The list corresponds to the mapping point list or core point list described above with reference to FIGS. 16 to 25.

The decoding may further include segmenting a frame. The frame may be segmented based on units, such as LPUs/PUs (prediction units), and clustering may be performed on each segmented unit. There may be various criteria for segmenting the frame, such as units of a specific size, objects and backgrounds, etc. Further, in the decoding operation, prediction (inter-prediction) between multiple frames may be performed based on the received list. The decoding may further include predicting points between the multiple frames. The decoding may further include updating the list.

In the receiving of the bitstream containing the point cloud data (S2600), the bitstream may include information indicating whether the clustering is performed. This information represents Obj_clustering_enable in FIG. 19. Further, the bitstream may include information indicating a method to perform the clustering. The information indicating the method to perform the clustering may correspond to the Obj_clustering_method information in FIGS. 20 and 21. Additionally, the bitstream according to the embodiments may include information about the parameters described in FIGS. 19 to 22, based on which clustering and inter-prediction of the point cloud data may be performed.

The reception method according to the embodiments may be performed by a reception device according to the embodiments. The reception device according to the embodiments includes a receiver configured to receive a bitstream containing point cloud data and a decoder configured to decode the point cloud data. The reception device according to the embodiments may be represented by a device that includes as a component a unit, module, or processor configured to perform the processing operations of the reception method described above.

The receiver and decoder according to the embodiments may correspond to or be combined with the reception device of FIG. 1, the receiver of FIG. 2, the point cloud decoder of FIGS. 10 and 11, the reception device of FIG. 13, the devices of FIG. 14, the method of FIG. 16, and/or the reception device described with reference to FIG. 24.

The receiver and decoder according to the embodiments may include a processor and a memory as components to perform the transmission method described above. The memory may store instructions that cause the processor to perform operations.

The transmission/reception device/method according to the embodiments may reduce the residuals and improve compression efficiency, compared to configuring a mapping point list based on the azimuth, laserID, or coding order of the points. By clustering points that actually correspond to the same object, points are referenced during inter-prediction. Therefore, accuracy of prediction is improved by referencing points with similar local motions.

With the transmission/reception device/method according to the embodiments, an index is assigned to each object after clustering, and each object is processable based on point information included in the mapping point list.

The transmission/reception device/method according to the embodiments analyzes the relationship between the points and organizes the core points into a list, and proceeds based on the core points included in the list during inter prediction. Thus, the accuracy of predicting the remaining points may be improved and the residual may be reduced. Furthermore, decoding does not require additional time to build the mapping list, which may reduce decoding time. The core points extracted by clustering according to embodiments may be utilized as additional information when analyzing the relationship between frames during inter-frame prediction (inter-prediction).

The operations according to the embodiments described in the present disclosure may be performed by a transmission/reception device including a memory and/or a processor according to embodiments. The memory may store programs for processing/controlling operations according to embodiments, and the processor may control various operations described in the present disclosure. The processor may be referred to as a controller or the like. The operations may be performed by firmware, software, and/or a combination thereof. The firmware, software, and/or a combination thereof may be stored in the processor or the memory.

Embodiments have been described from the method and/or device perspective, and descriptions of methods and devices may be applied so as to complement each other.

Although the accompanying drawings have been described separately for simplicity, it is possible to design new embodiments by merging the embodiments illustrated in the respective drawings. Designing a recording medium readable by a computer on which programs for executing the above-described embodiments are recorded as needed by those skilled in the art also falls within the scope of the appended claims and their equivalents. The devices and methods according to embodiments may not be limited by the configurations and methods of the embodiments described above. Various modifications can be made to the embodiments by selectively combining all or some of the embodiments. Although preferred embodiments have been described with reference to the drawings, those skilled in the art will appreciate that various modifications and variations may be made in the embodiments without departing from the spirit or scope of the disclosure described in the appended claims. Such modifications are not to be understood individually from the technical idea or perspective of the embodiments.

Various elements of the devices of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the device according to the embodiments may include one or more processors capable of executing one or more programs. The one or more programs may perform any one or more of the operations/methods according to the embodiments or include instructions for performing the same.

Executable instructions for performing the method/operations of the device according to the embodiments may be stored in a non-transitory CRM or other computer program products configured to be executed by one or more processors, or may be stored in a transitory CRM or other computer program products configured to be executed by one or more processors.

In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In this specification, the term "/" and "," should be interpreted as indicating "and/or." For instance, the expression "A/B" may mean "A and/or B." Further, "A, B" may mean "A and/or B." Further, "A/B/C" may mean "at least one of A, B, and/or C." Also, "A/B/C" may mean "at least one of A, B, and/or C." Further, in this specification, the term "or" should be interpreted as indicating "and/or." For instance, the expression "A or B" may mean 1) only A, 2) only B, or 3) both A and B. In other words, the term "or" used in this document should be interpreted as indicating "additionally or alternatively."

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signals unless context clearly dictates otherwise.

The terms used to describe the embodiments are used for the purpose of describing specific embodiments, and are not intended to limit the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components. As used herein, conditional expressions such as "if' and "when" are not limited to an optional case and are intended to be interpreted, when a specific condition is satisfied, to perform the related operation or interpret the related definition according to the specific condition.

Operations according to the embodiments described in this specification may be performed by a transmission/-reception device including a memory and/or a processor according to embodiments. The memory may store programs for processing/controlling the operations according to the embodiments, and the processor may control various operations described in this specification. The processor may be referred to as a controller or the like. In embodiments, operations may be performed by firmware, software, and/or a combination thereof. The firmware, software, and/or a combination thereof may be stored in the processor or the memory.

The operations according to the above-described embodiments may be performed by the transmission device and/or the reception device according to the embodiments. The transmission/reception device includes a transmitter/receiver configured to transmit and receive media data, a memory configured to store instructions (program code, algorithms, flowcharts and/or data) for a process according to embodiments, and a processor configured to control operations of the transmission/reception device.

The processor may be referred to as a controller or the like, and may correspond to, for example, hardware, software, and/or a combination thereof. The operations according to the above-described embodiments may be performed by the processor. In addition, the processor may be implemented as an encoder/decoder for the operations of the above-described embodiments.

[Mode for Disclosure]

As described above, related contents have been described in the best mode for carrying out the embodiments.

[Industrial Applicability]

As described above, the embodiments may be fully or partially applied to the point cloud data transmission/reception device and system. It will be apparent to those skilled in the art that various changes or modifications can be made to the embodiments within the scope of the embodiments. Thus, it is intended that the embodiments cover the modifications and variations of this disclosure provided

**Claims**

1. A method of transmitting point cloud data, the method comprising:

   encoding point cloud data; and
   transmitting a bitstream containing the point cloud data.

2. The method of claim 1, wherein the encoding of the point cloud data comprises:

   clustering the point cloud data; and
   selecting a first point related to a cluster generated in the clustering.

3. The method of claim 2, wherein the first point is a point closest to a mean of points included in the cluster.

4. The method of claim 3, wherein the encoding further comprises:

   generating a list based on the first point; and
   predicting points between a plurality of frames based on the list.

5. The method of claim 4, wherein the encoding further comprises:
   updating the list.

6. The method of claim 5, wherein the bitstream contains information indicating whether the clustering is performed.

7. The method of claim 6, wherein the bitstream contains information indicating a method to perform the clustering.

8. The method of claim 7, wherein the encoding further comprises:
   segmenting the frames.

9. A device for transmitting point cloud data, comprising:

   an encoder configured to encode point cloud data; and
   a transmitter configured to transmit a bitstream containing the point cloud data.

10. A method of receiving point cloud data, the method comprising:

    receiving a bitstream containing point cloud data; and
    decoding the point cloud data.

11. The method of claim 10, wherein the decoding comprises:
    clustering the point cloud data.

12. The method of claim 11, wherein the clustering comprises:

    performing the clustering based on a list,
    wherein the list contains points closest to a mean of a cluster.

13. The method of claim 12, wherein the decoding further comprises:
    predicting points between a plurality of frames.

**14.** The method of claim 13, wherein the decoding further comprises:
updating the list.

**15.** The method of claim 14, wherein the bitstream contains information indicating whether the clustering is performed.

**16.** The method of claim 15, wherein the bitstream contains information indicating a method to perform the clustering.

**17.** The method of claim 16, wherein the encoding further comprises:
segmenting the frames.

**18.** A device for receiving point cloud data, comprising:

a receiver configured to receive a bitstream containing point cloud data; and
a decoder configured to decode the point cloud data.

# FIG. 1

# FIG. 2

Acquisition 18000 → Ply file -geometry -attribute → Encoding 18001 → Encoded -geometry -attribute bitstream → Transmission 18002 → Decoding 18003 → Decoded -geometry -attribute → Rendering 18004

Head orientation information, viewport information

Feedback 18005

Head orientation information, viewport information

EP 4 478 287 A1

FIG. 3

# FIG. 4

positions        attributes

38000 — Transform coordinates

38006 — Transform colors

38001 — Quantize and remove points (voxelize)

38007 — Transfer attributes

38002 — Analyze octree

Reconstruct geometry

38008

38009 — Gnnerate LOD

RAHT

38003 — Analyze surface approximation

40010 — Lifting

38005

40011 — Quantize coefficients

38004 — Arithmetic encode

40012 — Arithmetic encode

geometry bitstream        atribute bitstream

# FIG. 5

# FIG. 6

# FIG. 7

$$1 + 2 + 4 + 8 = 15$$

FIG. 8

Level of details

EP 4 478 287 A1

# FIG. 9

P0   P1   P4   P3

P6  P7

P9

P5   P8  P2

| Original order | P0, P1, P2, P3, P4, P5, P6, P7, P8, P9 |
|---|---|
| LOD-based order | P0, P5, P4, P2 \| P1, P6, P3 \| P9, P8, P7 |

LOD0

LOD1

LOD2

# FIG. 10

# FIG. 11

# FIG. 12

12000 — Data input unit

12007

Position values of points

Set value, etc.

Attribute values of points

12001 — Quantization processor

Metadata processor

Color transform processor — 12008

12002 — Voxelization processor

Attribute transform processor — 12009

12003 — Octree occupancy code generator

Prediction/lifting/RAHT transform processor — 12010

12004 — Surface model processor

Arithmetic coder — 12011

12005 — Intra/inter-coding processor

12006 — Arithmetic coder

Sharing reconstructed position values

12012 — Transmission processor

Transmission

# FIG. 13

```
                              ↓
13000 ⌇          ┌─────────────────────┐
                 │      Receiver       │
                 └─────────────────────┘
                              ↓                    13006
13001 ⌇          ┌─────────────────────┐          ╱
                 │ Reception processor │
                 └─────────────────────┘
   Geometry bitstream    ↓        Attribute bitstream
        ↓          Set value, etc. ↓              ↓
13002 ⌇┌──────────────┐  ┌──────────┐  ┌──────────────┐⌇ 13007
       │ Arithmetic   │◄─┤ Metadata ├─►│  Arithmetic  │
       │  decoder     │  │  parser  │  │   decoder    │
       └──────────────┘  └──────────┘  └──────────────┘
              ↓                               ↓
13003 ⌇┌──────────────────┐          ┌────────────────────────┐⌇ 13008
       │Occupancy code-based│◄───────►│Inverse quantization    │
       │octree reconstruction│        │     processor          │
       │    processor      │         └────────────────────────┘
       └──────────────────┘                  ↓
              ↓
13004 ⌇┌──────────────────┐          ┌────────────────────────┐⌇ 13009
       │Surface model     │◄───────►│ Prediction/lifting/RAHT │
       │processor (triangle│         │inverse transform proc.  │
       │reconstruction,   │         └────────────────────────┘
       │up-sampling,      │                   ↓
       │voxelization)     │
       └──────────────────┘          ┌────────────────────────┐⌇ 13010
              ↓                       │  Color inverse transform│
13005 ⌇┌──────────────────┐          │     processor          │
       │Inverse quantization│◄──────►└────────────────────────┘
       │   processor       │                  ↓
       └──────────────────┘
              Sharing reconstructed
               position values
                                      ┌────────────────────────┐⌇ 13011
                                   ──►│      Renderer          │
                                      └────────────────────────┘
                                               ↓
```

# FIG. 14

# FIG. 15

# FIG. 16

1601 — Point coordinate transformation and sorting for point cloud clustering

1602 — Point cloud frame segmentation

1606 — Mapping list update

1603 — Point cloud clustering

1604 — Core point selection for each cluster/unit and list configuration

1605 — Point cloud inter prediction

# FIG. 17

# FIG. 18

slice 0     slice n

SPS | GPS | APS$_0$ | APS$_1$ | TPS | Geom$^0_0$ | Attr$^0_0$ | Attr$^0_1$ | ... | Geom$^n_0$ | Attr$^n_0$ | Attr$^n_1$

| Geom_slice_header | Geom_slice_data |

```
Tile(0).tile_bounding_box_xyz0;
Tile(0).tile_bounding_box_whd;
......
Tile(n).tile_bounding_box_whd;
Tile(n).tile_bounding_box_whd;
```

```
geom_geom_parameter_set_id;
geom_tile_id;
geom_slice_id;
geomBoxOrigin;
geom_box_log2_scale;
geom_max_node_size_log2;
geom_num_points;
```

EP 4 478 287 A1

# FIG. 19

| seq_parameter_set_rbsp( ) { | Descriptor |
|---|---|
| ... | |
| if(inter_prediction_enable) | |
| sps_Obj_clustering_enable | u(1) |
| ... | |
| } | |

# FIG. 20

| geometry_parameter_set( ) { | Descriptor |
|---|---|
| ... | |
| if(sps_Obj_clustering_enable) | |
| gps_Obj_clustering_enable | u(1) |
| if (gps_Obj_clustering_enable) { | |
| gps_Obj_clustering_method | ue(v) |
| if(gps_Obj_clustering_method ==0) | |
| numClusterGMM | ue(v) |
| elseif(gps_Obj_clustering_method==1){ | |
| hdbscan_distance_metric | ue(v) |
| hdbscan_minNumPoints | ue(v) |
| hdbscan_minClusterSize | ue(v) |
| } | |
| elseif(gps_Obj_clustering_method==2){ | |
| dbscan_distance_metric | ue(v) |
| dbscan_minNumPoints | ue(v) |
| dbscan_minEps | ue(v) |
| } | |
| elseif(gps_Obj_clustering_method==3){ | |
| numClusterKmeans | ue(v) |
| NumIterations | ue(v) |
| } | |
| numObj_gps | ue(v) |
| for(int i=0; i<numObj_gps<i++) { | |
| gps_objIndex[i] | ue(v) |
| gps_objPosition[i][3] | se(v) |
| } | |
| } | |
| ... | |
| } | |

# FIG. 21

| geometry_slice_header( ) { | Descriptor |
|---|---|
| ... | |
| if(gps_Obj_clustering) | u(1) |
| gsh_Obj_clustering | |
| if(gsh_Obj_clustering) { | |
|   gsh_Obj_clustering_method | ue(v) |
|   if(gsh_Obj_clustering_method ==0) | |
|   numClusterGMM | ue(v) |
|   elseif(gsh_Obj_clustering_method==1){ | |
|   hdbscan_distance_option | ue(v) |
|   hdbscan_minNumPoints | ue(v) |
|   hdbscan_minClusterSize | ue(v) |
|   } | |
|   elseif(gsh_Obj_clustering_method==2){ | |
|   dbscan_distance_metric | ue(v) |
|   dbscan_minNumPoints | ue(v) |
|   dbscan_minEps | ue(v) |
|   } | |
|   elseif(gps_Obj_clustering_method==3){ | |
|   numClusterKmeans | ue(v) |
|   NumIterations | ue(v) |
|   } | |
|   numObj_gsh | ue(v) |
|   for(int i=0; i<numObj_gsh<i++) { | |
|   gsh_objIndex[i] | ue(v) |
|   gsh_objPosition[i][3] | se(v) |
|   } | |
|   } | |
| ... | |
| } | |

# FIG. 22

| attribute_parameter_set( ) { | Descriptor |
|---|---|
| ... | |
| if(gps_Obj_clustering_enable) | |
| aps_Obj_clustering_enable | u(1) |
| if (gps_Obj_clustering_enable) { | |
| numObj_aps | ue(v) |
| for(int i=0; i<numObj_aps<i++) { | |
| aps_objIndex[i] | ue(v) |
| aps_objPosition[i][3] | sw(v) |
| } | |
| } | |
| ... | |
| } | |

# FIG. 23

Input data

IsIntra?

N — 2301 — Obj_clust ering_enable?

Y — clustering — 2302

N

Y — 2303 Generate mapping point list

Mapping point list update — 2305

Inter prediction — 2304

Intra frame prediction

Entropy coding — Output bitstream

# FIG. 24

# FIG. 25

S2500 — | Encode point cloud data |

S2510 — | Transmit bitstream containing point cloud data |

# FIG. 26

S2600 — | Receive bitstream containing point cloud data |

S2610 — | Encode point cloud data |

| INTERNATIONAL SEARCH REPORT | International application No. |
|---|---|
| | **PCT/KR2023/001705** |

**A. CLASSIFICATION OF SUBJECT MATTER**

**G06T 7/70**(2017.01)i; **G06T 9/00**(2006.01)i; **H04N 19/597**(2014.01)i

According to International Patent Classification (IPC) or to both national classification and IPC

**B. FIELDS SEARCHED**

Minimum documentation searched (classification system followed by classification symbols)

G06T 7/70(2017.01); G06T 7/254(2017.01); G06T 9/00(2006.01); H04N 19/136(2014.01); H04N 19/14(2014.01); H04N 19/597(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 포인트 클라우드(point cloud), 클러스터링(clustering), 포인트(point), 평균 (average), 리스트(list), 인터 예측(inter prediction)

**C. DOCUMENTS CONSIDERED TO BE RELEVANT**

| Category* | Citation of document, with indication, where appropriate, of the relevant passages | Relevant to claim No. |
|---|---|---|
| X | KR 10-2021-0116336 A (LG ELECTRONICS INC.) 27 September 2021 (2021-09-27)<br>See paragraphs [0005], [0007], [0020], [0035] and [0323]. | 1,9-10,18 |
| Y | | 2-8,11-17 |
| Y | KR 10-2338665 B1 (KONKUK UNIVERSITY INDUSTRIAL COOPERATION CORP.) 10 December 2021 (2021-12-10)<br>See paragraphs [0103]-[0104] and [0121]; and claim 1. | 2-8,11-17 |
| A | KR 10-2021-0134401 A (HUAWEI TECHNOLOGIES CO., LTD.) 09 November 2021 (2021-11-09)<br>See paragraph [0135]. | 1-18 |
| A | KR 10-2198724 B1 (BAIDU ONLINE NETWORK TECHNOLOGY (BEIJING) CO., LTD.) 05 January 2021 (2021-01-05)<br>See paragraph [0067]. | 1-18 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **25 May 2023** | **07 June 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/001705** |

**C.    DOCUMENTS CONSIDERED TO BE RELEVANT**

| Category* | Citation of document, with indication, where appropriate, of the relevant passages | Relevant to claim No. |
| --- | --- | --- |
| A | KR 10-2021-0094095 A (HUAWEI TECHNOLOGIES CO., LTD.) 28 July 2021 (2021-07-28) See paragraphs [0011]-[0012]. | 1-18 |

Form PCT/ISA/210 (second sheet) (July 2022)

**INTERNATIONAL SEARCH REPORT**
Information on patent family members

International application No.

**PCT/KR2023/001705**

| Patent document cited in search report | | | Publication date (day/month/year) | Patent family member(s) | | | Publication date (day/month/year) |
|---|---|---|---|---|---|---|---|
| KR | 10-2021-0116336 | A | 27 September 2021 | CN | 115280780 | A | 01 November 2022 |
| | | | | EP | 4124041 | A1 | 25 January 2023 |
| | | | | KR | 10-2378138 | B1 | 25 March 2022 |
| | | | | US | 2021-0289211 | A1 | 16 September 2021 |
| | | | | WO | 2021-187839 | A1 | 23 September 2021 |
| KR | 10-2338665 | B1 | 10 December 2021 | KR | 10-2021-0111052 | A | 10 September 2021 |
| KR | 10-2021-0134401 | A | 09 November 2021 | CN | 111726616 | A | 29 September 2020 |
| | | | | EP | 3934250 | A1 | 05 January 2022 |
| | | | | EP | 3934250 | A4 | 27 April 2022 |
| | | | | JP | 2022-526289 | A | 24 May 2022 |
| | | | | US | 2022-0007037 | A1 | 06 January 2022 |
| KR | 10-2198724 | B1 | 05 January 2021 | CN | 108460791 | A | 28 August 2018 |
| | | | | EP | 3505962 | A1 | 03 July 2019 |
| | | | | EP | 3505962 | B1 | 09 November 2022 |
| | | | | JP | 2019-149150 | A | 05 September 2019 |
| | | | | JP | 7167397 | B2 | 09 November 2022 |
| | | | | KR | 10-2019-0082065 | A | 09 July 2019 |
| | | | | US | 11037305 | B2 | 15 June 2021 |
| | | | | US | 2019-0206063 | A1 | 04 July 2019 |
| KR | 10-2021-0094095 | A | 28 July 2021 | CN | 111327897 | A | 23 June 2020 |
| | | | | CN | 111327897 | B | 14 January 2022 |
| | | | | EP | 3890320 | A1 | 06 October 2021 |
| | | | | EP | 3890320 | A4 | 26 January 2022 |
| | | | | JP | 2022-513484 | A | 08 February 2022 |
| | | | | JP | 7271671 | B2 | 11 May 2023 |
| | | | | US | 2021-0304444 | A1 | 30 September 2021 |
| | | | | WO | 2020-119725 | A1 | 18 June 2020 |

Form PCT/ISA/210 (patent family annex) (July 2022)